(19) Europäisches Patentamt
European Patent Office
Office européen des brevets

(11) EP 1 390 087 B1

(12) **EUROPEAN PATENT SPECIFICATION**

(45) Date of publication and mention of the grant of the patent:
**05.07.2006 Bulletin 2006/27**

(21) Application number: **02729002.2**

(22) Date of filing: **26.04.2002**

(51) Int Cl.:
***A61L 33/00*** *(2006.01)* ***A61L 31/08*** *(2006.01)*
***A61L 29/08*** *(2006.01)* ***A61L 15/24*** *(2006.01)*

(86) International application number:
**PCT/US2002/013194**

(87) International publication number:
**WO 2003/008011 (30.01.2003 Gazette 2003/05)**

(54) **CROSSLINKED MULTIPOLYMER COATING**
VERNETZTE MULTIPOLYMERE BESCHICHTUNG
REVETEMENT RETICULE MULTIPOLYMERE

(84) Designated Contracting States:
**DE FR GB IT**

(30) Priority: **27.04.2001 US 287172 P**

(43) Date of publication of application:
**25.02.2004 Bulletin 2004/09**

(73) Proprietor: **MILLIPORE CORPORATION**
**Billerica,**
**Massachusetts 01821 (US)**

(72) Inventor: **CHARKOUDIAN, John**
**Carlisle, MA 01741 (US)**

(74) Representative: **W.P. Thompson & Co.**
**Eastcheap House**
**Central Approach**
**Letchworth Garden City,**
**Hertfordshire SG6 3DS (GB)**

(56) References cited:
**EP-A- 0 475 807**
**US-A- 5 290 548**
**US-A- 5 543 054**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 390 087 B1

## Description

## Field Of The Invention

The present invention relates to the field of articles having a surface coating. The surface coating comprises a cross-linked multipolymer which has a superior combination of properties, including heat stable biomolecule resistant adsorptive properties, resistance to strong alkaline solutions, and low levels of extractable matter.

## Background of the Invention

Solutions that contain biological molecules are used in myriad applications in scientific and commercial settings. One problem encountered in handling such solutions is the adsorption of biomolecules onto fluid-contacting surfaces. Such adsorption can lead to fouling of liquid transporting lines, and to contamination of solutions. In addition, such adsorption can lead to bacterial growth on surfaces, which is highly undesirable.

In many applications, such as in the fields of medical devices and laboratory devices, it is highly desirable that the amount of biomolecular adsorption be minimal, and also that the devices be able to withstand relatively harsh conditions (for example, sterilization by autoclaving). Polymeric coatings can be used to coat such articles to improve their ability to resist adsorption ofbiomolecules. However, such coatings tend to lose this ability after autoclaving, and also tend to leach extractable matter from their polymeric surfaces after such treatment.

A further important property of materials used for devices that contact solutions containing biological molecules, and especially medical devices, is biocompatibility; i.e., the ability to minimize or resist adverse effects on biological tissues at the material interface. One important aspect of such biocompatibility is the ability to resist the adsorption of biological molecules, and particularly proteins, when contacted with tissues and biological solutions such as blood, plasma, and tear fluids. Such resistance is of critical importance, particularly in medical devices, because minimizing the adsorption of proteins and other biomolecules reduces the adhesion of cells and cellular components that can compromise the proper functioning of such devices.

Accordingly, it would be highly desirable to have surface coatings for article surfaces that contact biomolecule containing solutions or mixtures that resist biomolecule adsorption, and can withstand autoclaving with less deleterious effect upon the surface coating's beneficial properties. This invention is directed to these, as well as other, important ends.

Summary Of The Invention

In some embodiments, the present invention provides articles having a surface coating, said coating comprising a crosslinked multipolymer, said crosslinked multipolymer comprising:

at least one polyfunctional monomer selected from the group consisting of polyfunctional acrylamides, polyfunctional methacrylamides, and diacroylpiperazines; and
at least two monofunctional monomers selected from the group consisting of acrylamides, methacrylamides, and N-vinyl pyrrolidones.

Also provided in accordance with the present invention are methods for the preparation of an article having a biomolecule resistant surface coating, said method comprising the steps of:

(a) providing an article having a surface;
(b) optionally contacting said surface of said article with a wetting liquid to wet said surface thereof;
(c) optionally displacing said wetting liquid with a second wetting liquid, leaving said article wetted with said second liquid;
(d) contacting said surface of said article with a solution containing:

(1) at least two monofunctional monomers selected from the group consisting of acrylamides, methacrylamides, and N-vinyl pyrrolidones; and
(2) at least one polyfunctional monomer selected from the group consisting of polyfunctional acrylamides, polyfunctional methacrylamides and diacroyl piperazines;

said solution optionally further comprising one or more polymerization initiators; and
(e) polymerizing said monomers to form said heat stable biomolecule resistant surface.

In some embodiments, the crosslinked multipolymer comprises at least one monofunctional monomer that is

acrylamide, wherein the acrylamide nitrogen of said acrylamide is substituted with at least one gem dialkyl substituted carbon.

In further embodiments, the crosslinked multipolymer is a copolymer formed from dimethylacrylamide, diacetone acrylamide, and methylene-bis-acrylamide.

In still further embodiments, the crosslinked multipolymer is a copolymer formed from methylene-bis-acrylamide, N-vinyl pyrrolidone, and either of dimethylacrylamide or diacetone acrylamide.

In yet further embodiments, the biomolecule resistant polymer coating is a separately formed surface coating; said surface coating comprising a crosslinked multipolymer; said crosslinked multipolymer comprising:

at least one polyfunctional monomer selected from the group consisting of polyfunctional acrylamide monomers, polyfunctional methacrylamide monomers, and diacroylpiperazines; and

at least two different monofunctional monomers selected from the group of N-vinyl pyrrolidone monomers and monomers having the Formula I:

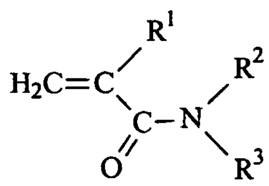

I

wherein:

$R^1$ is H or $CH_3$,

$R^2$ is H or $C_1$-$C_6$, preferably $C_1$-$C_3$ alkyl, either linear or branched,

$R^3$ is H or $C_1$-$C_6$, preferably $C_1$-$C_3$ alkyl, either linear or branched, or $C(CH_3)_2CH_2C(=O)CH_3$, or $(P=O)((NCH_3)_2)_2$, or $C=ON(CH_3)_2$, or $CH_2$-O-$R^4$, where $R^4$ is $C_1$-$C_5$ alkyl, either linear or branched, or $(CH_2$-$CH_2$-O)n-$R^5$, where $R^5$ is -H or -$CH_3$, and n=2 or 3; provided that $R^2$ and $R^3$ are not simultaneously H.

In further embodiments, the crosslinked multipolymer further comprises a supplemental property modifying monomer, which can be (3-(methacryloylamino)propyl)trimethylammonium chloride, (3-acrylamidopropyl)trimethylammonium chloride, 2-acrylamido-2-methyl-1-propanesulfonic acid or aminopropylmethacrylamide.

In some embodiments, two of the monofunctional monomers are present in the ratio of about 1 to about 5 by weight, or in the molar ratio of about 1 to about 2. In further embodiments, the total amount of the monofunctional monomers present is from about 0.5% to about 20% by weight, or from about 2% to about 10%, or from about 4% to about 8% by weight.

In some embodiments, the ratio of the total amount of monofunutional comonomers to polyfunctional crosslinker monomer is about 1 to about 10 by weight, or about 2 to about 6 by weight.

In some embodiments, the polymer coating is hydrophilic. In further embodiments, the coating is a hydrogel.

In further embodiments, the polymer coating has a biomolecule binding of less than about 30 microgram per square centimeter measured by the IgG binding test for porous articles, and less than about 0.30 microgram per square centimeter measured by the IgG binding test for nonporous articles.

In further embodiments, the polymer coating has TOC extractables of less than about 1 microgram of extractable matter per square centimeter of coating as measured by the TOC Extractables test for porous articles, or less than about 0.01 microgram of extractable matter per square centimeter of coating as measured by the TOC Extractables test for nonporous articles.

In still further embodiments, the polymer coating has TOC extractables of less than about 2 micrograms of extractable matter per square centimeter of coating as measured by the NVR Extractables test for porous articles, or less than about 0.02 micrograms of extractable matter per square centimeter of coating as measured by the NVR Extractables test for porous articles.

In some embodiments, the polymer coating is caustic resistant. In some further embodiments, the polymer coating has caustic resistance of less than about 1.3 as measured by the Flow Time Measurement test.

In some embodiments, the article is an article of labware, a medical article, a beverage fluid container or conduit, a marine article, or a plumbing article.

In some embodiments where the article is an article of labware, the article is cuvette, a cuvette cap, a round, conical or cylindrical flask, a beaker, a centrifuge tube,a centrifuge bottle, a chromatography column, a cylinder, a graduated cylinder, an incubation chamber, a fermentation chamber, a pipette, a replaceable pipette tip, a multiwell plate, a weighing boat, a media filter, dialysis tubing, laboratory tubing, pump tubing, a syringe, a syringe needle, a burette, a molds for electrophoresis tubes or gels, an electrophoresis apparatuses, a blotter, a sequencer, a gel staining tray, a filter unit, a funnel, a hybridization tube, a shaker flask, a cell culture flask, a cell culture tube, a culture vessel, a culture dish, a cloning cylinder, a media bottle, a media jar, or a conduit for conducting a fluid that contains biomolecules.

In further embodiments, the article is a medical article, which can be a biosensor, an implant, a catheter, a wound dressing, a contact lense, an implantable lens or a dermal patch.

In further embodiments, the article is a beverage fluid container or conduit, or a marine article, which can be boat, or an article of boating equipment.

In further embodiments, the article is an aquarium, an aquarium article, or an article of plumbing.

Also provided in accordance with the present invention are methods for increasing the biocompatibility of an article comprising the step of coating at least one surface of said article, said coating comprising a crosslinked multipolymer, said crosslinked multipolymer comprising:

at least one polyfunctional monomer selected from the group consisting of polyfunctional acrylamides, polyfunctional methacrylamides, and diacroylpiperazines; and

at least two monofunctional monomers selected from the group consisting of acrylamides, methacrylamides, and N-vinyl pyrrolidones.

Brief Description of the Figures

Figure 1 shows the levels of extractable material as total organic carbon for membranes of the prior art, and of the present invention, after different soak times.

Figure 2 illustrates the effect of heat on the resistance to biomolecule adsorption of membranes of the present invention.

Detailed Description

In one aspect, the present invention provides porous and non-porous articles having a surface coating. The surface coatings of the invention have one or more desirable properties, including resistance to biomolecule adsorption (sometimes referred to as "low affinity or sorbability for biomolecules" or "biomolecule resistance"), heat stable resistance to such biomolecule adsorption, chemical resistance to strong alkaline solutions such as are used to clean and/or sanitize articles, and very low levels of extractable matter.

In one aspect of the invention, it has been discovered that articles that come into contact with fluids (e.g., solutions) that contain biomolecules can be modified by forming *in situ* a cross-linked multipolymer on the surface thereof to obtain a coated article having the aforementioned properties.

Thus, in some embodiments, the present invention provides articles which have a crosslinked multipolymer surface, which, in some embodiments, is formed *in situ* on the surface of the article, and which has superior biomolecule resistance.

As used herein, the term "biomolecule" is intended to mean any organic molecule that is part of a living organism, or analogs thereof. Thus, biomolecules include polymers of amino acids, for example peptides and proteins (including antibodies and enzymes), and polymers of nucleotides such as DNA and RNA, and oligonucleotides, including for example DNA and RNA probes. Also included within the definition of biomolecules are carbohydrates and lipids. It is intended thatsynthetically produced analogs of each of the foregoing be included in the definition of the term "biomolecule", as well as cells, and cell fragments that contain any of the aforementioned biomolecules.

As used herein, the terms "biomolecule resistant" or "biomolecule resistance" as applied to coatings, coated article surfaces or methods of the invention mean, for a nonporous article surface (for example a smooth article surface that has been coated with a coating of the invention), such a surface that adsorbs less than about 0.30 micrograms of IgG per square centimeter of surface area as measured by the IgG binding test described herein. For porous surfaces (for example porous membranes having a surface coating of the invention), a biomolecule resistant surface is one which

adsorbs less than about 30 micrograms of IgG per square centimeter of surface area as measured by the IgG binding test described herein. Alternatively, the terms "biomolecule resistant" or "biomolecule resistance" as applied to coatings, coated article surfaces or methods of the invention mean surfaces or surface coatings which provide a negative BSA-Ponseau test as described herein.

Because the surface coated articles of the invention have superior biomolecule resistance, the articles of the invention also possess superior biocompatibility. While not wishing to be bound by a particular theory, it is believed that one of the significant initial mechanisms by which devices that contact biological solutions and tissues are fouled, degenerated or other adversely affected by surrounding biological tissues and solutions, is the adhesion ofbiomolecules, and in particular, proteins. Indeed, it is believed that the ability of a surface to resist adsorption of proteins is generally a prerequisite for the ability of a surface to resist attachment of bacteria and mammalian cells (see, for example, Ostuni, E. et al., *Langmuir*, **2001**, *17*, 6336-6343). Thus, the ability to resist the adsorption of biomolecules conferred by the coatings of the presentinvention are also expected to impart significantly increased biocompatibility to articles of the invention.

In some embodiments, the surface coatings of the present invention provide a biomolecule resistant surface which also is heat stable. As used herein the term "heat stable" as applied to coatings, coated article surfaces or methods of the invention means that the surface, after exposure to heat as described herein, has less than about twice the IgG adsorption of the same surface prior to heat exposure, as measured by the IgG test described herein.

In further embodiments, the surface coatings of the invention provide a biomolecule resistant surface that also is caustic resistant. As used herein, the term "caustic resistant" or "caustic resistance" as applied to coatings, coated article surfaces or methods of the invention means a surface coating that remains wettable after exposure to 0.1 NaOH for two hours at ambient temperature. Additionally, for articles wherein flow of liquid is directed through the coated surface of the article, such as porous polymer membranes, "caustic resistance" alternatively means a ratio of flow times after such exposure to that before such exposure of less than about 1.5, when measured by the flow time measurement test described herein.

In further embodiments, the surface coatings of the invention provide a biomolecule resistant surface that also is clean. As used herein in connection with the surface coatings, coated articles and methods of the present invention, the term "clean" or "clean article surface coating" means an article surface coating that, when produced, has for a nonporous surface either

a. less than about 0.02 micrograms of extractable matter per square centimeter of coated surface, and preferably less than about 0.01 microgram of extractable matter per square centimeter, as determined by the NVR Extraction test described herein; or
b. less than about 0.01 microgram of extractable matter per square centimeter of article surface coating as determined by the TOC extractables test described herein;

Or, for a porous surface, has either:

a. less than about 2 micrograms of extractable matter per square centimeter of coated surface, and preferably less than about 1 microgram of extractable matter per square centimeter, as determined by the NVR Extraction test described herein; or
b. less than about 1 microgram of extractable matter per square centimeter of article surface coating as determined by the TOC extractables test described herein.

In some embodiments, the surface coatings of the invention are separately formed in situ, and have one or more of the properties described above.

A wide variety of articles can be modified as described herein to contain the surface coatings of the invention. These include, without limitation, articles of labware, medical articles, beverage fluid containers or conduits, a marine articles, and plumbing articles. Further examples, without limitation, of such articles include those composed of ceramics, metals, carbon, polymers and combinations thereof. In some preferred embodiments, articles of the invention are composed of polymers or ceramics. Representative polymers that can be used to manufacture articles which can be modified with the surface coatings of the invention include polysulfone polymers, preferably aromatic sulfone polymers, such as polysulfous and polyetbersulfone polymers, perfluorinated thermoplastic polymers including polytetrafluoroethylene and polyvinylidene fluoride, polyolefin polymers such as polyethylene, ultrahigh molecular weight polyethylene and polypropylene, and polyesters such as polyethyleneterepthalate, polycarbonate, plasticized and nonplasticized polyvinyl chloride, and other thermoplastic polymers useful in applications where biological samples are contained or transported. In some particularly preferred embodiments, the article surface to be coated is a polymer of PVDF, polyolefin or Nylon, and derivatives. Those skilled in the art will readily be able to identify other polymers useful in the formation of articles capable of being modified with the surface coatings of the invention.

It also will be appreciated that the surface coatings of the invention can be applied to articles in several forms, including without limitation polymer coatings which have the ability to be highly hydrated, such as hydrogels, and coatings which have limited or no ability to be hydrated.. For example, to prepare a hydrogel coating according to the invention, one would select monomers that have a high capacity bind water, as are known in the art. For example, a suitable hydrogel can be prepared by combining 7 grams acrylamide, gram methylenebisacrylamide, 0.2 grams Irgacure 2959 and 91.8 grams water, exposing the solution to UV, washing the resultant gel, and maintaining the same in water. See also for example Ind. Eng. Chem. Res. 1996, 35, page 3180.

Articles having both porous and smooth surfaces can be modified with the surface coatings of the present invention. By porous articles is meant articles in which the porosity is through-going, so that fluids can transverse the membrane or article thickness. It will be appreciated that for porous articles, such a ultraporous (i.e., ultrafilter) and microporous (i.e., microfilter) polymer membranes, the term "surface" as applied to the surface coatings of the membrane or other similarly porous article, means the entire surface area of such article that is coated with a coating of the invention, including external surfaces (i.e., surfaces not within the thickness of the membrane) and interstitial surfaces within the thickness of the membrane. For nonporous articles, such as dense films, which can have smooth or rough surfaces but which are nonporous and therefore lack the interstitial surfaces possessed by porous membranes or other porous articles, the term "surface" as applied to the surface coatings of the articles coated with the surface coatings of the invention means the surface of the article which is accessible to the solution used to coat the article. Such surfaces can include those open to view (for example the surface of a laboratory weighing boat), and those hidden from view, but which are nevertheless "external" surfaces of the article, for example the lumen of a catheter, the interior of a conduit or of tubing, or a cavity of an article regardless whether it is accessible to view.

As used herein, the term "crosslinked multipolymer" means a polymer made from three or more monomers, of which at least one monomer has two or more reactive sites which can take part in a polymerization reaction, or can crosslink separate polymer chains. In the context of the present invention, multipolymers contain at least three different monomers, and can also contain one or more additional monomers to impart or refine desired properties of the surface coating. In some embodiments, the crosslinked multipolymer is made from two monofunctional monomers and one difunctional monomer.

In some embodiments, the crosslinked multipolymer covers the entire surface of the article that is to be coated. In some embodiments, the crosslinked multipolymer is formed *in situ* from a solution of two or more monofunctional monomers and a crosslinking polyfunctional monomer (referred to herein as the "reactant solution"). A monofunctional monomer is one that has a single unsaturated functional group. Polyfunctional monomers are molecules which have more than one unsaturated functional group. In some embodiments, two or more of the monofunctional monomers are mono- or di-N-substituted acrylamides or methacrylamides. In some embodiments, the crosslinking monomer is a polyfunctional acrylamide or methacrylamide. In one preferred embodiment, dimethylacrylamide and diacetone acrylamide are used with methylene-bis-acrylamide. In another preferred embodiment, N-vinyl pyrrolidone is substituted for one of the mono- or di-N-substituted acrylamide or methacrylamide monofunctional monomers.

In some embodiments, at least one polyfunctional monomer is a polyfunctional acrylamide monomer, a polyfunctional methacrylamide monomer, or a diacroylpiperazine, and at least two different monofunctional monomers are selected from acrylamide monomers, methacrylamide monomers, and N-vinyl-pyrrolidones.

In further embodiments, at least one polyfunctional monomer is a polyfunctional acrylamide monomer, a polyfunctional methacrylamide monomer, or a diacroylpiperazine, and at least two different monofunctional monomers are selected from N-vinyl pyrrolidone monomers and monomers having the general Formula I:

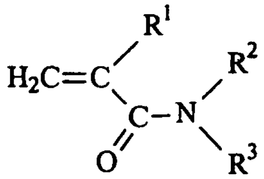

I

alternatively, described as $H_2C{=}C(R^1)C({=}O)N(R^2)\ (R^3)$
wherein:

$R^1$ is H or $CH_3$,
$R^2$ is H or $C_1$-$C_6$, preferably $C_1$-$C_3$ alkyl, either linear or branched,
$R^3$ is H or $C_1$-$C_6$, preferably $C_1$-$C_3$ alkyl, either linear or branched, or $C(CH_3)_2CH_2C(=O)CH_3$, or $(P=O)((NCH_3)_2)_2$, or $C=ON(CH_3)_2$, or $CH_2$-O-$R^4$, where $R^4$ is $C_1$-$C_5$ alkyl, either linear or branched, or $(CH_2$-$CH_2$-O)n-$R^5$, where $R^5$ is -H or -$CH_3$, and n=2 or 3; provided that $R^2$ and $R^3$ are not simultaneously H.

In some more preferred embodiments, the crosslinked multipolymer is a polymer formed from either:

(a) methylene-bis-acrylamide, dimethylacrylamide, and diacetone acrylamide; or
(b) methylene-bis-acrylamide, N-vinyl pyrrolidone, and either of dimethylacrylamide or diacetone acrylamide.

Also provided in accordance with some embodiments of the present invention are methods for the preparation of an article having a biomolecule resistant surface coating, said method comprising the steps of:

(a) providing an article having a surface;
(b) optionally contacting said surface of said article with a wetting liquid to wet said surface thereof;
(c) optionally displacing said wetting liquid with a second wetting liquid, leaving said article wetted with said second liquid;
(d) contacting said surface of said article with a solution containing:

(1) at least two monofunctional monomers selected from the group consisting of acrylamides, methacrylamides, and N-vinyl pyrrolidones; and
(2) at least one polyfunctional monomer selected from the group consisting of polyfunctional acrylamides, polyfunctional methacrylamides and diacroyl piperazines;
said solution optionally further comprising one or more

polymerization initiators; and
(e) polymerizing said monomers to form said heat stable biomolecule resistant surface.

In some embodiments, the entire surface of the article to be coated is coated with the multipolymer. Thus, the reactant solution should preferably wet the entire surface to be coated. This is preferably facilitated by performing a washing step prior to contacting the surface of the article with the reactant solution. Thus, in some preferred embodiments, the surface of the article is first washed with a washing liquid which completely wets the entire surface to be coated. Preferably, the washing liquid can preferably be exchanged with the reactant solution.

In some preferred embodiments where an aqueous reactant solution is employed, the wetting liquid can be an organic-water composition having lower surface tension than the surface tension required to wet the article surface. Examples of suitable wetting liquids are alcohol-water solutions, preferably methanol-water, ethanol-water, or isopropanol-water solutions.

In some preferred embodiments where a washing step is employed, it is desirable to perform a second washing step. For example, where one or more components of the wetting liquid can interfere with the polymerization or crosslinking reactions, a second washing step can be used to remove the washing liquid and replace the same with a second washing liquid that does not interfere with the polymerization or crosslinking reactions. For example, if an aqueous reactant solution is to be used, the wet article surface is washed with water to remove the first wetting liquid and produce a water filled or water-wet article surface. The wet article surface is then contacted with the reactant solution (for example by soaking in the reactant solution or applying the reaction solution to the surface to be coated) to produce the desired reactant composition in the article surface. Preferably, the first and second washing steps, where desired, are performed at ambient temperatures, for instance, 20°C to 30°C, and preferably for times from a few seconds to a few minutes.

If the reactant solution wets the article surface sufficiently, due to containing an organic solvent for that purpose, or if the concentration of reactants in the reactant solution is sufficient to lower the surface tension of the solution to allow the reactant solution to fully wet the article surface, then neither of the washing steps are required. Thus, in some preferred embodiments, the reactant solution will contain one or more additives which lower the surface tension of the reactant solution sufficiently to avoid such washing steps, and which do not interfere with the subsequent polymerization reaction. Preferred examples of such additives include ethyl hexyl diol, propylene carbonate, tripropyleneglycol methyl ether and 2-methyl-2,4-pentane diol. The amount of additive to the reactant solution required to achieve proper wetting depends on the amount and type of monomers and initiators being used, and will be readily determinable by those of skill in the art without undue experimentation.

In some embodiments, the reactant solution includes solvent, monofunctional monomers, at least one polyfunctional crosslinking monomer, and, optionally, one or more initiators. The choice of solvent for the reactant solution

depends on the choice of monomers and optional initiators. The solvent preferably (1) dissolves the reactants and, if present, the initiator; (2) does not interfere or hinder the polymerization reaction; and (3) does not attack the article surface. One example of a particularly preferred solvent is water.

In some preferred embodiments of the invention, the multipolymer is formed from at least two monofunctional monomers chosen from acrylamides, methacrylamides, or N-vinyl pyrrolidones, and at least one polyfunctional acrylamide or methacrylamide crosslinking monomer. However, in other preferred embodiments, other monomers may be used. These include N-vinyl pyrrolidones, and other mono- or di-N-substituted acrylamide or methacrylamide monomers, for example those having the Formula I as described *supra.*

In some embodiments, it is preferred that the ratio of a first monofunctional comonomer to a second monofunctional comonomer be from about 1 to 5, more preferably from about I to 2. In further preferred embodiments, the total amountof comomomers is from about 0.5% to about 20%, more preferably between about 2% to about 10%, and still more preferably from about 45 to about 8%.

In some embodiments, the multipolymer can contain one or more monofunctional monomers in addition to the two monofunctional monomers previously described. Such additional monofunctional monomers can be advantageously employed to impart or modify specific properties of the multipolymer. For example, in some embodiments where it is desirable to modify the hydrophilic nature or ionic charge content of the multipolymer, it is preferable to include a third monofunctional monomer having a different functionality from the other two monofunctional monomers to effect the modification. Preferably, where an additional monofunctional monnomer or monomers are employed in the multipolymer, such additional monomers are employed in a minor amount, or an amount comparable to the monofunctional monomers. Representative additional property modifying monomers include can be(3-(methacryloylamino)propyl)-trimethylammonium chloride, (3-acrylamidopropyl)trimethylammonium chloride, 2-acrylamido-2-methyl-1-propanesulfonic acid and aminopropylmethacrylamide

In some embodiments if the invention, the multipolymer contains at least one polyfunctional crosslinker monomer (or "crosslinking monomer"). While not wishing to be bound by a particular theory, it is believed that the crosslinking monomer facilitates a permanent modification to the article surface by, *inter alia,* both participating in the chain polymerization reactions, and by crosslinking the polymerized chains of monofunctional monomer. Examples of preferred crosslinking monomers suitable for use in the present invention include polyfunctional acrylamides, polyfunctional methacrylamides, and diacroylpiperazine, with polyfunctional acrylamides, and polyfunctional methacrylamides being more preferred. Ethyleno-bis-acrylamide and methylene-bis-acrylamide are particularly preferred crosslinking monomers, with methylene-bis-acrylamide being especially preferred.

In some preferred embodiments, the ratio of amount of crosslinker monomer to the total amount of monofunctional monomers present in the multipolymer is from about 1 to about 10, more preferably from about 2 to about 6.

As used herein in reference to the monomeric components of the multipolymer, the terms "monomer" and "comonomer" shall be used interchangeably.

In some preferred embodiments, the polymerization of the monofunctional monomers and the crosslinking copolymer or copolymers of the present invention is achieved through free radical initiation and propagation. In some preferred embodiments, one or more free radical initiators can be included in the in the reactant solution containing the monomers to facilitate polymerization. Any of a wide variety of initiators known in the art will find applicability in the present invention. In some preferred embodiments the initiator or initiators are water soluble. In other preferred embodiments, for example when wetting reactant solutions are used, sparingly water soluble initiators are preferred.

Those of skill in the art will readily be able to determine suitable initiators for a given reactant solution. Examples of suitable initiators include, for example, ammonium persulfate, potassium persulfate, azobis(4-cyanovaleric acid, Irgacure 2959 (Ciba-Geigy, Hawthorn, NY), 2,2'-azobis(2-amidino-propane)hydrochloride and the like. Preferably, the initiator or initiators are used in the range of from about 0.1% to about 1% by weight, based on the total reactant solution.

In some embodiments, after the surface of the article to be coated is contacted with (i.e., is saturated with) the reactant solution, excess reactant solution removed from the external surfaces, while still leaving such external surfaces wetted with solution. After the excess reactant solution is removed, polymerization of the reactant solution is then begun by exposing the wet article surface to any conventional energy source, such as heating, ultraviolet light, electron beam or gamma radiation. Free radical polymerization initiated by heat is typically achieved by heating the saturated media or membrane to at least about 60°C and maintaining that temperature for from about 0.1 to about 10 minutes, preferably between about 1 to about 2 minutes. Higher temperatures can be used depending on the combination of initiator and monomers used, up to the point where boiling or too rapid vaporization adversely affects the polymerization reaction.

In some embodiments, ultraviolet light is used to initiate the *in situ* polymerization reaction. Preferably, the article surface saturated with the reactant solution (which optionally contains one or more initiators) is illuminated with an ultraviolet light source such as Fusion Systems F600 (Rockville, MD) with an "H" bulb. Filters can be used to reduce or remove undesirable wavelengths which may cause unwanted damage to the porous media or membrane being modified. Those of skill in the art will appreciate that the balance of exposure time to the UV lights with lamp intensity to optimize polymerization conditions will be a matter of routine experimentation. Generally, with a 600 watt source,

exposure times of from about 2 seconds to about 10 seconds, preferably from about 3 seconds to about 5 seconds, will be suitable.

In some preferred embodiments, electron beam technology is used to initiate polymerization, for example by facile adaptation of the methods described in U.S. Patent 4,944,879. Typically, an article wet with the reaction solution is passed through a curtain of electrons generated by an electron beam processor. The processor delivers the desired dose at from about 100 kV to about 200 kV. The article is transported at a speed suitable to give the desired exposure time under the curtain. Exposure time, combined with dose, determines the dose rate. Typical exposure times are from about 0.5 seconds to about 10 seconds. Dose rates generally are from 0.05 kGy (kiloGray) to about 5 kGy.

It is known that the presence of molecular oxygen adversely affects free radical polymerization reactions. Thus, in each of the foregoing methods of initiation previously described, it is preferred that the amount of oxygen in the reaction zone be controlled to levels below about 200 ppm, preferably below about 50 ppm. In some preferred embodiments, this is accomplished by flooding the reaction zone with inert gas such as nitrogen or argon, or by other well known methods of excluding air.

In further preferred embodiments, the polymerization of the monomers of the reactant solution can be initiated by gamma irradiation. Typically, in this method, an article that is wet with reaction solution is irradiated. Preferably, the reactant solution is degassed, that is, treated so as to remove air, and particularly oxygen, from the solution. In some preferred embodiments, degassing is accomplished by replacing air with an inert gas such as helium, nitrogen or argon. In other preferredembodiments, degassing is accomplished by reducing the pressure over the monomer solution, for example with a vacuum pump. The degassed monomer solution laden article surface is then sealed with a sealing material so as to remain in a degassed state, and then irradiated at the desired dose. Preferably, the sealing material will not be degraded by the irradiation, and also does not significantly retard the gamma rays. A wide variety of materials are known in the art to be useful as sealing materials, for example many plastics, especially films, and for flat planar surfaces, borosilicate glass.

Typically, total dosages of about 0.02 to about 1.0 kGy are suitable. Typical exposures of about 5 to about 500 kilorads per hour, more preferably about 5 to about 150 kilorads per hour can be used, with typical irradiation times of from about 4 to about 60 hours. Those of skill in the art will readily be able to determine the proper balance of dose rate and time to arrive at the total dosage.

The degree to which the crosslinked multipolymer is grafted (i.e., the degree to which the multipolymer is bound) to the article surface can be controlled by, *inter alia,* the choice of method of initiation the polymerization reaction. For example, gamma irradiation is generally expected to give a greater degree of grafting of the copolymer to a polymeric article surface, while heat induced initiation will have a lesser degree of grafting. Those of skill in the art will readily be able to select the initiation method that will give the desired degree of grafting of multipolymer to the article surface.

The methods of the invention are applicable to the fabrication of articles having a wide variety of surface topologies, including flat, rounded, conical, and tubular surfaces. Coating methods are known from the textile fiber and monofilament industries which can be adapted to the methods of the invention to facilitate coating of articles.

Generally, the surface coatings of the invention find use in the modification of any article where fouling liquids, particularly those liquids containing biomolecules, can contaminate or accrue on liquid-contacting surfaces of the article.

In some embodiments, the present invention provides coated articles of labware and methods of preparing such coated articles. Articles of labware, as used herein, denotes articles used in laboratories that come in to contact with samples that contain biomolecules. Thus, articles of labware includes cuvettes and caps therefor, round, conical or cylindrical flasks, beakers, centrifuge tubes and bottles, chromatography columns, cylinders and graduated cylinders, incubation and fermentation chambers, pipettes, replaceable pipette tips, and multiwell plates used in a wide variety of applications including, for example, assays. Also included are weighing boats, media filters, dialysis tubing, dispenser tubing, laboratory tubing, pump tubing, syringes, syringe needles, burettes, molds for electrophoresis tubes and gel, and electrophoresis apparatuses, blotters, sequencers, gel staining trays, filter units, furmels, hybridization tubes, shaker flasks, cell culture flasks and tubes, culture vessels, culture dishes (e.g. petri dishes) and other cultureware, cloning cylinders, and tissue culture media. Also included are bottles, vials, jars, canisters, carboys, and other containers for storing solutions or mixtures that contain biomolecules, for example media bottles, jars, and all manner of liquid conduits used in laboratories for the transport of biomolecule containing samples such as tubing, the like. Such labware articles are known to be composed of a variety of materials, including but not limited to glass, plastics, ceramics, and metals, and each, without limitation, are withing the scope of the term labware. Further labware articles can readily be identified by those of skill in the art in Biochemicals and Reagents for Life Science Research (Sigma Co. Catalog) 2000-2001, Fisher Scientific Co. Catalog 2000/2001, and VWR Scientific Products Catalog 2000/2001.

In some embodiments, the present invention provides coated medical articles and methods of preparing such coated articles. As used herein, the term "medical articles" is intended to include medical devices and fungibles that are used in or on the body of an animal, including but not limited to human, in connection with medical treatment, including, for example, surgery, examination, administration of medication, and the like. Thus, without limitation, medical devices include prostheses, sensors including biosensors, implants, catheters, wound dressings, contact lenses, artificial organs

including but not limited to artificial hearts, implantable lenses for example for treatment of cataracts, and drug delivery devices including but not limited to dermal patches for delivering medication.

In further embodiments, devices having surface coatings of the invention include those useful in the biotechnology industry, including preparative and diagnostic devices. Examples of such devices include substrates for enzyme assays, including enzyme-linked immunosorbent assays, systems for pattemed cell culture (see, for example, Chen, C.S., et al., *Science* **1997**, *276*, 1425-1428), tissue engineering (see, for example, Niklason, L.E., et al., *Science* **1999**, *284*, 489-493), materials used in microfluidic and analytical systems (see, for example, *Microsystem Technology in Chemistry and Life Sciences*, Manz., A. and Becker, Eds., Springer-Verlag Berlin-Helsinki 1998 (Top. Curr. Chem No. 194)), and systems for high throughput screening using proteins (see, for example, Macbeath, G. et al., *Science* **2000**, *289*, 1760-1603), and nucleic acids and/or cells (see, for example, Whitney, M., et al., *Nat. Biotechnol.* **1998**, *16*, 1329-1333), including for example substrates for gene chips and cell sorting devices. Further examples of devices which can beneficially incorporate the surface coatings of the invention include hemodialyzers, artificial organs including artificial hearts, industrial and biomedical bioreatcors, and bioseparation devices. Further examples can be found in *Biomaterials Science An Introduction to Materials in Medicine,* Ratner, B.D., Schoen, F.J. and Lemons, J.E., Eds., Academic Press 1996.

In some embodiments, the present invention provides coated beverage fluid containers and conduits, and methods for preparing such coated containers and conduits. The term "beverage fluid containers and conduits" is intended to mean all manner of containers and fluid conduits used in the beverage industry for the preparation and storage of beverages, especially the wine, beer, soft drink, juice industries. Representative examples of such containers and fluid conduits include fermentation chambers and conduits used in apparatuses for preparation (e.g. fermenting), storage and dispensing of beer and wine. Further examples include storage vats for beer, wine, and precursors thereof. Also included are containers, and all parts of dispensers of soft drinks, milk, juices, and other beverages that come in to contact with the soft drink, milk, juice or other beverage.

In further embodiments, the present invention provides coated marine articles and methods for preparing such coated articles. As used herein, the term "marine articles" denotes articles that come into contact with seawater or fresh water (e.g., lake, pond, river or stream) water, including boats and articles of boating equipment. Marine articles also include fresh and salt water aquariums and aquarium articles. Thus, in some embodiments the invention provides boats having on or more surfaces modified with the coatings of the invention. Preferably coating of the invention is applied at least to the parts of the boat in contact with the water, including the hull below the waterline, the keel, the rudder, and, if present, propeller and/or centerboard. Boats include without limitation wood, fiberglass, metal and other polymer hull water craft, regardless of size. Articles of boating equipment include those articles normally found on boats, for example oars, life vests, sails, and the like. Aquarium articles include articles that are found in fresh and/or salt water aquariums, including decorative artificial plants, novelties and the like, as well as water conducting surfaces of pumps that circulate water in the aquarium, and filter media for such pumps.

In further embodiments, the present invention provides coated plumbing articles and methods for the preparation of such coated articles. Articles of plumbing include, for example, metal, glass or plastic pipes and associated fittings and couplings that are used to transfer fresh water or waste water (e.g., sewage).

It is not the intent of the discussion of the present invention to exhaustively present all combinations, substitutions or modifications that are possible, but to present representative methods for the edification of the skilled practitioner. Representative examples have been given to demonstrate reduction to practice and are not to be taken as limiting the scope of the present invention. The inventor seeks to cover the broadest aspects of the invention in the broadest manner known at the time the claims were made.

Methods

### 1. Biomolecule Resistance

Biomolecule resistance to adsorption can be measured by a static soak test using IgG protein. The protein solution is prepared with phosphate buffered saline (PBS), purchased from Sigma Chemical Company, St. Louis. Mo (Sigma 1-5523). Goat gamma globulin, also obtained from Sigma Chemical Company (Sigma I-5523) is used at a concentration of 1 mg/ml. $^{125}$I-goat anti(rabbit IgG) is purchased from NEN Life Science Products Boston, MA (NEX-155) and added to the protein solution to reach a final concentration of 0.1 $\mu$Ci/ml.

Ten 13 mm diameter samples of the article surface are placed in a 16x100 mm test tube and exactly 10 ml of protein solution are added with a calibrated micropipettor. All test tubes are placed in a rack on a rotary shaker table and agitated for two hours. After agitation, the fluid is aspirated from the test tubes and the wet sample is washed three times with 10 ml of PBS. The washed sample is transferred to a clean test tube and placed into a gamma counter (Minaxi Auto-gamma 5000 series from Packard Instrument Company, Downers Grove, IL) to determine the radioactivity bound on each disk, in units of counts per minute (cpm). Counts per minute for control tubes with 10 ml of protein solution and

no membrane are also determined. Based on the control tubes, the relation between measured radioactivity and actual protein concentration is calculated for the amount of protein on each sample by the following equation:

$$\text{Control relation} = \text{total mean cpm} / \text{mg IgG} = \text{total mean cpm} / 1000\,\mu\text{g IgG}$$

Because the radioactivity found on each sample is measured, the amount of protein on each sample can be calculated through the following equation:

$$\text{Protein bound sample} = (\text{cpm} / 13.3\ \text{cm}^2) * (1000\ \mu\text{g IgG} / \text{total mean cpm})$$

This quantity is reported as protein bound in units of $\mu$g per $cm^2$ of article surface (a 13 mm disk has an area of 1.33 $cm^2$). At least duplicates are run for each sample tested.

Typical values found for porous articles, such as low-binding commercial PVDF membranes, such as Durapore® membranes, are in the 15 $\pm$ 4 $\mu g/cm^2$ range. In contrast, competitive PVDF membranes, such as Fluorodyne® membranes from Pall corporation, are in the 47 $\pm$ 19 $\mu g/cm^2$ range.

Alternatively, Biomolecule resistance can be determined according to the BSA-2% Ponseau S test described in Example 7, *infra*.

**2. Heat Stability of Biomolecule Resistance**

To determine the heat stability of the biomolecule resistance of coated articles, samples of articles are either (1) heated to 135°C for two hours in an oven; (2) held in a 121°C steam autoclave for one hour; or (3) for materials that melt at temperatures over 100°C, heated to 100°C for two hours in an oven, and then tested as described above.

**3. TOC (Total Organic Carbon) method for determining extractables level**

Three article samples having the same area of coated surface are placed in a pre-cleaned 40 ml TOC vial. The vial is covered by a suitable hydrophobic porous sheet, such as GVX (hydrophobic PVDF membrane) and is secured by a rubber band. The vial is then autoclaved at 126°C for 1 hour. After cooling the vial is removed. The GVX is removed and 40.0 ml of fresh MilliQ® water is added, and the vial immediately capped with its pre-cleaned, Teflon lined septum cap. The samples are allowed to extract overnight (minimum 16 hrs). The extracts are then analyzed for TOC levels by a Sievers 800 TOC analyzer. The raw PPM results are corrected for the blank, which is an empty vial that was also autoclaved and extracted overnight. These ppm TOC results are converted to $\mu$g C per $cm^2$ by multiplying by 40 ml and dividing by 52.05 $cm^2$.

**4. TOC/NVR (Total Organic Carbon / Non-Volatile Residue) method for determining extractables level for coated articles**

A sample of a coated article having approximately 8 $ft^2$ of coated surface is wrapped in GVX. The sample is then autoclaved at 126°C for 1 hour. After cooling the membrane is removed from the GVX and added to 800 ml of fresh MilliQ® water in a pre-cleaned 1 L graduated cylinder such that the coated article surface is completely submerged. The cylinder is capped with a layer of aluminum foil and the sample is allow to extract overnight (minimum 16 hours). The sample is then removed. Aliquots of the extracts are then analyzed for TOC (40 ml) and NVR (200-600 ml) by standard methods.

**5. Flow time measurement to determine caustic resistance**

For articles in which liquid flow is intended to pass through the coated surface, for example with coated porous membranes, such articles can be tested for Flow Time, which is a method to measure permeability, then exposed to 0.1 NaOH for two hours at ambient temperature and re-tested for Flow Time. Flow Time testing is done by passing a measured amount of liquid through a membrane at a set pressure and measuring the time for complete passage. The ratio of Flow Times after to before exposure is a measure of the effect of caustic on the article. A higher ratio shows more effect. A ratio of 1 shows no effect. A caustic resistant article is one that remains wettable after this exposure and has a ratio of flow times after exposure to that before exposure of less than about 1.5.

The following procedure is employed for this test:

1. Samples of articles having the same area of surface coating are prepared.
2. The samples are wetted out with water and placed in a filter holder with a reservoir for holding a volume of water and attached to a vacuum pump.
3. Water is flowed through the samples under 27.5 inches Hg differential pressure.
4. After equilibrium was achieved, the time for 500 ml of water to flow through the sample is recorded.
5. This measurement is made before and after exposure to 0.1M NaOH for two hours at ambient temperature. Exposure to 0.1M NaOH is performed by swirling the samples in a large excess of base, and washing the samples with water to neutrality before the flux measurement.
6. Data are rounded off the ratios to the nearest whole number.

**Examples of Membrane Articles**

One application of the methods of the invention is in the formation of coated porous membranes. Method for the preparation of coated membranes are disclosed in U.S. Provisional Application Ser. No. No.60/287,172 filed April 27, 2001. The following examples illustrate the preparation and testing of some such embodiments.

**Example 1**

**Modification and Evaluation of PVDF Microporous Membranes by Methods of the Invention**

Six 47mm disks of the hydrophobic PVDF membrane of 0.1 micron rating (Durapore® Millipore Corporation, Bedford, MA) were cut and their weight is recorded. They were then pre-wetted with water by being placed in methanol, and then soaked in MilliQ® water.

A solution was made containing the acrylamide monomers, photoinitiator, and water. The composition of this solution is shown in Table 1:

**Table 1**

| Component | Grams |
|---|---|
| N,N - Dimethylacrylamide (DMAm) | 1.50 grams |
| Diacetoneacrylamide (DACAm) | 1.50 |
| N,N'-Methylenebisacrylamide(MBAm) | 0.75 |
| Irgacure 2979* photoinitiator | 0.15 |
| Water | 96.1 |
| | 100 total grams |
| *Ciba-Geigy, Hawthorn, NY | |

After total dissolution of reactants, the solution is placed in a dish and the prewetted membranes are introduced into the solution. The dish is covered and the membranes are swirled on a Orbit shaker (LabLine Instruments, Melrose Park, IL) in the solution for 10 minutes. The membranes are removed and individually placed between 1 mil polyethylene sheets. The excess solution is removed by rolling a rubber roller over the polyethylene/membrane disks/polyethylene sandwich as it lays flat on a table. The polyethylene sandwich is then taped to a transport unit which conveys the assembly through a Fusion Systems UV exposure lab unit with an "H" bulb. Time of exposure is controlled by how fast the assembly moves through the UV unit. In this example, the assembly moves through the UV chamber at 20 feet per minute.

After emerging from the UV unit, the membranes are removed from the sandwich and immediately placed in methanol, where they are washed by swirling for 15 minutes. Next, they are washed in MilliQ® water for 15 minutes. Following this washing procedure they are allowed to air dry.

The membranes are weighed again, and the % weight add-on per membrane is calculated as the added weight divided by the initial weight multiplied by 100. For this example, the weight add-on was 4.4%.

Table 2 shows the measurements made on the membranes:

**Table 2**

| Membrane Number | Conditioning | Measurements |
|---|---|---|
| | | |
| One | None | Wetting time, flow time, protein binding |
| Two | Dry heat for 2 hours at 135°C | Wetting time, protein binding |
| Three | Autoclave 1 hour at 124°C | Wetting time, protein binding |
| Four, Five, Six | None | Total organic carbon extractables |

Relative to the phobic substrate, the modified membrane displayed a water flow time increase of 25%. The total organic carbon extractables were measured as 0.646 micrograms/square centimeter. The wetting time and protein binding are given in Table 3 below:

**Table 3**

| Membrane Number | Wetting Time (seconds) | Protein Binding ($\mu g/cm^2$) |
|---|---|---|
| | | |
| One | 0.2 | 14 |
| Two | 2.0 | 18 |
| Three | 0.3 | 21 |

Wetting time was measured by dropping a 47 mm disk horizontally into water and timing the appearance of complete wetting through the disk.

**Example 2**

**Modification of PVDF Membranes Using Different Monomers With DMAm and MBAm**

PVDF membranes were modified as described in Example 1 using different monomers with DMAm and MBAm, as shown Table 4 below:

**Table 4**

| Ex.# | Monomer/ grams | Monomer/ grams | Monomer/ gram s | Protein Binding as made | Protein Binding after Dry Heat $\mu/cm^2$ | Protein Binding after Autoclave $\mu/cm^2$ | TOC |
|---|---|---|---|---|---|---|---|
| 2-1 | DMAm/ 2.0 | DACAm /1.0 | MBAm/ 0.75 | 15 | 20 | 26 | 0.518 |
| 2-2 | DMAm/ 2.0 | DEAm/ 1.0 | MBAm/ 0.5 | 13 | 34 | 20 | |
| | | | | | | | |
| 2-3 | DMAm/ 2.0 | IPAm/ 1.0 | MBAm/ 0.5 | 16 | 30 | 21 | |
| 2-4 | DMAm/ 2.0 | BACAm / 1.0 | MBAm/ 0.5 | 14 | 18 | 10 | |
| 2-5 | NVP/ 1.5 | DACAm /1.5 | MBAm/ 1.0 | 26 | 219 | 85 | |
| 2-6 | DMAm/ 3.0 | | MBAm/ 1.0 | 19 | 199 | 72 | 0.661 |
| 2-7 | NVP/ 1.5 | | MBAm/ 1.0 | 15 | 305 | 217 | |

**Example 3**

**Continuous Roll Production**

Rolls of surface modified membrane were prepared by sequentially passing hydrophobic 0.1μm pore sized membrane at various speeds through a wetting pan containing an aqueous solution composed of various concentrations of N,N-dimethylacrylamide (DMAm), N,N'-methylenebisacrylamide (MBAm), diacetoneacrylamide (DACAm), and tri(propyleneglycol)methyl ether (TPM, constant 20%), exposing to UV radiation from both sides using four Fusion UV Systems F600 lamps while sandwiched between polyethylene film, rinsing in a tank of methanol followed by a tank of water, and drying over a vacuum drum while impinging with 115°C dry air. The various conditions employed and results are given in Table 5 below. Controls in Lines 1 and 2 are included to demonstrate the effect of mixing monomers on the thermal stability of protein binding.

**Table 5**

| % DMAm | % MBAm | % DACAm | Speed mm/sec | Water Permeability LMH/kPa | Wettability dynes/cm to wet after 2 hours 135°C dry oven exposure | IgG Binding μg/cm$^2$ | IgG Binding after 2 hrs @ 135°C μg/cm$^2$ | IgG Binding after 131 °C autoclave μg/cm$^2$ |
|---|---|---|---|---|---|---|---|---|
| 3.0 | 1.0 | 0.0 | 102 | 21.0 | 82 | 27.0 | 139.9 | 100.3 |
| 0.0 | 1.0 | 3.0 | 76 | | | 28.7 | 127.4 | 29.2 |
| 0.75 | 0.75 | 4.0 | 102 | 54.5 | 60 | 19.1 | 27.2 | 19.9 |
| 0.75 | 0.75 | 4.0 | 102 | 51.4 | 60 | 16.9 | 27.2 | 19.3 |
| 0.75 | 0.75 | 4.0 | 152 | 52.1 | 70 | 14.3 | 26.1 | 13.6 |
| 0.75 | 0.75 | 4.0 | 152 | 53.0 | 70 | 16.0 | 27.7 | 19.6 |
| 1.00 | 1.00 | 5.0 | 152 | 48.3 | 70 | 10.8 | 20.2 | 16.9 |
| 2.00 | 0.75 | 4.0 | 152 | 48.1 | 77 | 13.0 | 17.2 | 14.5 |
| 2.00 | 0.75 | 3.0 | 152 | 52.2 | 77 | 8.9 | 18.8 | 16.4 |
| 2.00 | 1.00 | 4.0 | 152 | 47.9 | 77 | 9.3 | 16.8 | 14.9 |

**Example 4**

**Results for Caustic Resistance Testing With Commercial PVDF Membranes and Those of the Present Invention**

The ratio of Flow Times for membranes before and after exposure to 0.1 N NaOH for two hours at ambient temperature are shown in Table 6 below.

**Table 6**

| Membrane | Flow Time (sec) | Flow time after exposure (sec) | Ratio |
|---|---|---|---|
| Durapore® | 238 | 970 | 4 |
| Fluorodyne® 0.1 μ | 746 | 8491 | 11 |
| Fluorodyne® 0.2 p | 201 | 2987 | 15 |
| Present Invention | 281 | 301 | ~1 |

As discussed above, it is greatly preferred that modified membrane, such as those of the present invention, can be easily and effectively "cleaned"; i.e., subjected to a regime of post reaction washing and/or extraction steps to remove materials which could subsequently be extracted into the product being filtered. To reduce extractables to such low levels, it is necessary to have a cleaning method that will remove low molecular weight species and unreacted

monomers, as well as unbound oligomers and polymeric species. This may be done by sufficiently exhaustive extraction with a liquid which will solvate these materials. There is, however, an economic price to be paid as the extraction time is increased, and it is therefore desirable that the extraction time be minimized. Moreover, it has been observed that modified membranes of the prior art do not show reduced extractables despite lengthy washing or soaking, if they are subsequently autoclaved. While not wishing to be bound by a particular theory, it is believed that this may be due to hydrolytic breakdown products of the modification resulting from autoclaving, which are extracted subsequently. It can be seen that it would be desirable to have a modified membrane or porous media that had a stable extractables level after exposure to heat, for example autoclaving, or exposure to highly alkaline liquids. It is a significant attribute of the membranes of the present invention that they can be efficiently cleaned up to very low levels of extractables, levels lower than membranes of the prior art.

Figure 1 illustrates the results from a test to compare extractable levels of membranes of the prior art and those of the present invention. Sets of both membranes were subjected to a post-manufacturing soak at conditions designed to remove significant amounts of any extractables present. Sub-sets of each type were soaked for different times in order to determine the effect of increasing soak time on extractables removal.

Samples of commercial PVDF microporous membrane (Durapore® , Millipore Corporation, Bedford, MA) were soaked in 80°C water for times as shown in Figure 1. After each time interval, samples were removed and tested in the TOC method for determining extractables levels. Figure 1 shows that TOC extractables are between about 2 to 5 micrograms per square centimeter. The level of extractables was unaffected by the 80°C soak time. This indicates a limit to any improvement for these membranes.

Membranes of the present invention were soaked in methanol for times as shown in Figure 1, and TOC extractables were determined as described above. The black squares denote Durapore® and the grey triangles, inverted triangles and circles denote independent runs of identical membranes of the invention. It can be seen that for the membranes of the invention, TOC extractables are approximately an order on magnitude lower, about 0.2 to 0.4 micrograms per square centimeter. These results show that membranes of the present invention can be made significantly cleaner than those of the prior art, and that exhaustive soaking will not lower the extractables level of membranes of the prior art to the level attainable for those of the present invention.

As discussed above, one significant problem with the membranes of the prior art is that their biomolecule resistance will significantly decrease when heated; i.e., that is, their biomolecule resistance will not be sufficiently heat stable. Dry heat has a more deleterious effect, and wet heat, as in autoclaving, has a lesser, but still substantial effect. Since membranes are subjected to various heat regimes, depending on use, these effects pose a serious drawback to commercial development.

Surprisingly, it has been discovered that the crosslinked multipolymers of the invention, and in particular the crosslinked polymers of acrylamides, do not have this sensitivity to heat. In particular, crosslinked multipolymer containing methacrylamides and containing N-vinyl pyrrolidones share this heat stability of high resistance to biomolecule sorption.

Figure 1, which illustrates the results of Example 1, clearly shows the beneficial effect of the present invention. In Figure 2, the results from three modifications of the same base membrane are shown. Modification of two sets of samples with crosslinked polyacrylamide from a single monomer (N, N-dimethylacrylamide (DMAm) in one case and diacetone acrylamide (DACAM) in the other) and crosslinker monomer (methylene bis-acrylamide (MBAm)) have good, that is low, protein adsorption as made. When samples of these modified membranes are heated to 135°C for two hours in an oven and then tested, protein adsorption was markedly higher, by approximately 4-10 times the as-made value. A separate sample of each was held in a 121°C steam autoclave for one hour and then tested for protein adsorption. The DMAm sample was much higher than the as-made value, while the DACAm sample had about the same value. In sharp contrast, the membrane modified with a mixture of DMAm and DACAm monomers showed a negligible effect from the two hour 135°C heating or the autoclaving. In addition, the as-made protein adsorption of the multipolymer modified membrane was lower than those of the single monomer modified membranes. A heat stable biomolecule resistant surface is one that has no increase or a small increase in biomolecule adsorption after heat exposure. More specifically, a heat stable biomolecule resistant surface is one which, after exposure to heat as described herein, has less than about twice the IgG adsorption of the same surface prior to heat exposure, as measured by the IgG test described herein.

A decrease in biomolecule adsorption after heat exposure may be seen due to variability in the test method when the change is inherently small. There also may be optimized formulations that will give the effect of a decrease. In the context of the present invention, biomolecule resistance is measured with the IgG test. Representative heat exposures are done with dry heat at 135°C for 2 hours, and with wet heat at 124°C for 1 hour. A heat stable biomolecule resistant surface is one that has less than about twice the IgG adsorption of the unexposed-to-heat surface.

Given that practitioners in the field generally attempt to maximize the hydrophilic nature of surfaces where resistance to biomolecule adsorption is desired, it is further surprising that in the Examples 2-1 to 2-7 the use of a less hydrophilic monomer with the hydrophilic dimethylacrylamide monomer gives an improvement in overall biomolecule resistance. Table 7 below gives the values of P, the octanol water partition coefficient for representative monomers used

in this invention. P equals the ratio of the concentration in the octanol phase to the concentration in the aqueous phase when a compound is subjected to an octanol-water two phase extraction. Higher values of P show a more hydrophobic compound.

**Table 7**

| Monomer Abbreviation | Monomer name | P |
|---|---|---|
| DMAm | Dimethylacrylamide | 4.57 |
| NVP | Methyl Pyrrolidine | 3.80 |
| MBAm | N,N-Methylene bis-acrylamide | 2.63 |
| DACAm | Diacetoneacrylamide | 11.48 |
| DEAM | Diethylacrylamide | 22.39 |
| IPAm | N-Isopropylacylamide | 11.48 |
| BACAm | N-t-Butylacrylamide | 13.49 |
| | | |
| | | |

P values for the monomers were calculated using ChemPlus♥ software (HyperCube, Inc., Waterloo, Ont.). Monomer P values were then used to calculate a combined P value for the crosslinked multipolymers of Examples 1 and 3. The combined values were the sum of the mass fraction of the monomers times its P value. The combined P value is a measure of the hydrophilic nature of the resulting polymer, the higher the value, the less hydrophilic is the polymer.

Table 8 shows the combined P values, the protein binding after dry heat (2 hours at 135°C) and after autoclave (1 Hour at 124°C steam) exposure. In all the examples in this Table, N,N-methylene bis-acrylamide is the crosslinking monomer.

**Table 8**

| Ex. # | Combined Octanol-Water Partition Coefficient for Crosslinked Multipolymers | Protein Binding after Dry Heat μ/cm$^2$ | Protein Binding after Autoclave μ/cm$^2$ |
|---|---|---|---|
| DMAm/DACAm | 6.06 | 20 | 26 |
| DMAm/DACAm | 6.96 | 18 | 21 |
| DMAm/DEAm | 9.48 | 34 | 20 |
| DMAm/IPAm | 6.32 | 30 | 21 |
| DMAm/BACAm | 6.90 | 18 | 10 |
| DACAm/NVP | 6.38 | 219 | 85 |
| | Combined Octanol-Water Partition Coefficient for Crosslinked Single Monomer Polymers | | |
| DMAm | 4.1 | 199 | 72 |
| NVP | 3.5 | 305 | 217 |

These examples are not shown to limit this invention, but to illustrate the surprising observation that the heat stability of resistance to bbmolecule adsorption, as here shown by protein binding after either dry or wet heat exposure, is improved by the incorporation of a more hydrophobic monomer into the crosslinked multipolymer. Specifically, the results show that polymers made with MBAm and DMAm bind more protein than crosslinked multipolymers made with these monomers and a more hydrophilic monomer. Similarly, a crossinked polymer from NVP and MBAm has more binding after heat exposure than a crosslinked multipolymer made with NVP, MBAm and DACAm.

**Example 5**

**Comparative Example 1**

**Sartorius Hydrosart 0.2μ Cellulose Membrane**

Hydrosart 0.2μ cellulose membrane was removed from a Sartocon stack. The ethanol was washed out with MilliQ® water. After 3 washes with excess MilliQ® water, a sample of membrane was dried and analyzed by infrared. IR and Scanning Electron Microscopy indicated the membrane was composed of regenerated cellulose on a support of cellulose paper.

**Alkaline Stability**

The washed, but not dried membrane was subjected to the alkaline stability test. The ratio of flow times after to before base treatment was 1.06. This indicates that, according to this criterion, the membrane is alkaline stable.

**Protein Binding**

The membrane was tested for protein binding using the standard IgG protocol. The values were:

As is: 183 μgrams/$cm^2$
2 hours 135° C dry heat: 191 μgrams/$cm^2$
Autoclaved: 204 μgrams/$cm^2$

**Total Organic Carbon (TOC)**

47mm disks were washed for 30 minutes with MilliQ® water. The MilliQ® water was replaced, and the membranes were washed an additional 24 hours. Through each individual disk a total of 275cc of MilliQ® water were flushed under a pressure gradient of about 13 pounds/$in^2$. These membranes were tested for TOC. Three membranes were grouped together and tested for TOC without autoclaving, and three membranes were grouped together and tested for TOC after autoclaving (the membranes of the present invention are tested for TOC after autoclaving). The experiment was repeated to confirm the results.

| Membrane | TOC before Autoclaving μgrams/$cm^2$ | TOC after autoclaving μgrams/$cm^2$ |
|---|---|---|
| | | |
| Hydrosart 0.2μ MF TOC#1 | 0.25 | 5/08 |
| Hydrosart 0.2μ MF TOC#2 | 0.09 | 3.46 |

This example indicates that although Hydrosart membranes can be flushed to a low TOC value, autoclaving generates large amounts of extractables. The membranes of the current invention do not generate extractables of this magnitude after autoclaving.

**Example 6**

**Comparative Example #2**

**Sartorious Sartobran 0.2μ Cellulose Acetate Membranes**

Sartobran P 0.2μ cellulose membrane was removed from a Sartocon stack. The membrane was washed with MilliQ® water. After 3 washes with excess MilliQ® water, a sample of membrane was dried and analyzed by infrared. IR and Scanning Electron Microscopy indicated the membrane was composed of cellulose acetate on a support of polyethyleneterphthalate.

**Alkaline Stability**

The washed, but not dried membrane was subjected to the alkaline stability test. The ratio of flow times after to before base treatment was 8.20. This indicates that, according to this criterion, the membrane is not stable to alkaline treatment.

**Protein Binding**

The membrane was tested for protein binding using the standard IgG protocol. The values were:

A is: 62 μgrams/$cm^2$
2 hours 135° C dry heat; 64 μgrams/$cm^2$
Autoclaved: 100 μgrams/$cm^2$

**Total Organic Carbon (TOC)**

47 mm disks were washed for 30 minutes with MilliQ® water. The MilliQ® water was replaced, and the membranes were washed an additional 24 hours. The membranes were tested for TOC using the standard autoclave method. This test gave a value of 2.35 μgrams/$cm^2$.

While the present invention has been illustrated in terms of porous membranes, the methods of the invention are applicable to the preparation of a variety of articles having the caustic resistant, heat stable biomolecule resistant surface described herein. Thus, in some preferred embodiments, the present invention provides methods for preparing an article having the caustic resistant, heat stable biomolecule resistant multipolymer surface described herein. In some embodiments, the methods comprise contacting the surface of the article with a reactant solution containing:

(1) at least two monofunctional monomers selected from the group consisting of acrylamides, methacrylamides, and N-vinyl pyrrolidones; and
(2) at least one polyfunctional monomer selected from the group consisting of polyfunctional acrylamides, polyfunctional methacrylamides and diacroylpiperazines;

said solution optionally further comprising one or more polymerization initiators;
polymerizing said monomers to form the heat stable biomolecule resistant surface on the surface of the article, and optionally washing the article.

**Non-membrane Examples:**

**Example 7**

**Adsorption of coated articles having nonporous surfaces as determined by BSA-2% Ponseau S Test.**

Dense films of Nylon 66 and polyethylene, as well as polystyrene from a weighing boat and a piece of Nylon nonwoven material were modified with surface coatings of the invention and their propensity to absorb bovine serum albumin(BSA) were determined as described below. It will be appreciated that myriad articles of various shapes can be fabricated from these polymers, and also that other polymers apparent to those of skill in the art can be similarly modified.

Nylon 66 and polyethylene(PE) dense films, approximately 3 mils thick, were treated with either water or a solution of N,N-Dimethylacrylamide (DMAm), Diacetoneacrylamide (DACAm), and Methylenebisacrylamide (MBAm). A polystyrene weighing boat was cut to provide another flat sample about 9 mils thick and was treated in a similar manner, as was a piece of Nylon nonwoven 8 mils thick.

The samples were covered with another piece of PE film so that a thin film of water or the solution covered the Nylon, PE, and polystyrene samples. The samples were then placed in a tray, and passed through an electron beam exposure system at a dosage of 5 megarads. This exposure initiates polymerization and grafts the resulting copolymers to the surface of the film samples. The samples were then washed with water and allowed to dry. The samples were cut in half, and one half was placed in an oven at 100 degrees centigrade for 2 hours.

A solution of BSA in pH 7.4 phosphate buffered saline was prepared. The unheated and heated film samples, along with control samples were placed in the BSA solution for 16 hours. The positive control was an unmodified polyvinylidene fluoride(PVDF) membrane and the negative control was the same membrane surface modified with a similar solution to that used for the film samples.

After the BSA treatment, all of the samples were rinsed with water and immersed for 30 minutes in a solution

of 2% Ponseau S, a product of Sigma Chemical Company used for staining serum proteins on membranes. This dye stains surfaces with adsorbed proteins with a red color.

The samples were flushed with water until no further dye was removable. All of the acrylamide surface modified samples, both unheated and heated, remained stain free (i.e., the BSA-Ponseau test was negative for protein). All of the umnodified samples were stained to some extent with the red color of Ponseau S. This shows that the modified samples resisted the adsorption of proteins, and that the surfaces were stable to thermal treatment.

## Claims

1. An article comprising a coating, said coating comprising a crosslinked multipolymer, said crosslinked multipolymer comprising:

   at least one polyfunctional monomer selected from the group consisting of polyfunctional acrylamides, polyfunctional methacrylamides, and diacroylpiperazines; and
   at least two monofunctional monomers selected from the group consisting of acrylamides, methacrylamides, and N-vinyl pyrrolidones.

2. An article according to claim 1, wherein said article is an article of labware, a medical article, a beverage fluid container or conduit, a marine article, or a plumbing article.

3. An article according to claim 1 or 2, wherein said article is an article of labware.

4. An article according to claim 3, wherein said article of labware is a cuvette, a cuvette cap, a round, conical or cylindrical flask, a beaker, a centrifuge tube, a centrifuge bottle, a chromatography column, a cylinder, a graduated cylinder, an incubation chamber, a fermentation chamber, a pipette, a replaceable pipette tip, a multiwell plate, a weighing boat, a media filter, dialysis tubing, laboratory tubing, pump tubing, a syringe, a syringe needle, a burette, a mold for electrophoresis tubes or gels, an electrophoresis apparatus, a blotter, a sequencer, a gel staining tray, a filter unit, a funnel, a hybridization tube, a shaker flask, a cell culture flask, a cell culture tube, a culture vessel, a culture dish, a cloning cylinder, a media bottle, or a media jar.

5. An article according to any of claims 1 to 4, wherein said article is a medical article.

6. An article according to claim 5, wherein said medical article is a biosensor, an implant, a catheter, a wound dressing, a contact lense, an implantable lens or a dermal patch.

7. An article according to claim 1 or 2, wherein said article is a beverage fluid container or conduit.

8. An article according to claim 1 or 2, wherein said article is a marine article.

9. An article according to claim 8, wherein said marine article is a boat.

10. An article according to claim 8, wherein said marine article is an article of boating equipment.

11. An article according to claim 1, wherein said article is an aquarium, an aquarium article, or an article of plumbing.

12. An article according to any preceding claim, wherein said coating is biomolecule resistant.

13. An article according to any preceding claim, wherein said coating is biomolecule resistant as determined by the IgG binding test.

14. An article according to any preceding claim, wherein said coating is biomolecule resistant as determined by the BSA-Ponseau test.

15. An article according to any preceding claim, wherein said coating is heat stable.

16. An article according to any preceding claim, wherein said coating is caustic resistant.

**17.** An article according to any preceding claim, wherein said coating is a clean coating.

**18.** An article according to any preceding claim, wherein said coating is a polymer coating.

**19.** An article according to any preceding claim, wherein said coating is a hydrogel.

**20.** An article according to any preceding claim, wherein said crosslinked multipolymer comprises at least one monofunctional monomer that is acrylamide, wherein the acrylamide nitrogen of said acrylamide is substituted with at least one gem dialkyl substituted carbon.

**21.** An article according to any preceding claim, wherein said crosslinked multipolymer is a copolymer formed from dimethylacrylamide, diacetone acrylamide, and methylene-bis-acrylamide.

**22.** An article according to any of claims 1 to 19, wherein said crosslinked multipolymer is a copolymer formed from methylene-bis-acrylamide, N-vinyl pyrrolidone, and either of dimethylacrylamide or diacetone acrylamide.

**23.** An article according to any of claims 1 to 19, wherein said coating is a separately formed surface coating; said surface coating comprising a crosslinked multipolymer; said crosslinked multipolymer comprising:

at least one polyfunctional monomer selected from the group consisting of polyfunctional acrylamide monomers, polyfunctional methacrylamide monomers, and diacroylpiperazines; and
at least two different monofunctional monomers selected from the group of N-vinyl pyrrolidone monomers and monomers having the formula:

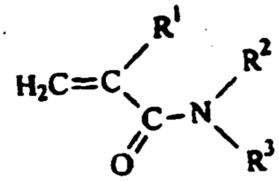

wherein:

$R^1$ is H or $CH_3$,
$R^2$ is H or $C_1$-$C_6$, preferably $C_1$-$C_3$ alkyl, either linear or branched,
$R^3$ is H or $C_1$-$C_6$, preferably $C_1$-$C_3$ alkyl, either linear or branched, or $C(CH_3)_2CH_2C(=O)CH_3$, or $(P=O)((NCH_3)_2)_2$, or $C=ON(CH_3)_2$, or $CH_2$-$OR^4$, where $R^4$ is $C_1$-$C_5$ alkyl, either linear or branched, or $(CH_2$-$CH_2$-$O)_n$-$R^5$ where $R^5$ is -H or -$CH_3$, and n=2 or 3, ; provided that $R^2$ and $R^3$ are not simultaneously H.

**24.** An article according to any preceding claim, wherein said crosslinked multipolymer further comprises a supplemental property modifying monomer.

**25.** An article according to claim 24, wherein said supplemental property modifying monomer is selected from the group consisting of (3-methacryloylamino)propyl)trimethylammonium chloride, (3-acrylamidopropyl)trimethylammonium chloride, 2-acrylamido-2-methyl-1-propanesulfonic acid and aminopropylmethacrylamide.

**26.** An article according to any preceding claim, wherein two of said monofunctional monomers are present in the ratio of 1 to 5 by weight.

**27.** An article according to any preceding claim, wherein two of said monofunctional monomers are present in the molar ratio of 1 to 2.

**28.** An article according to any preceding claim, wherein the total amount of said monofunctional monomers present is from 0.5% to 20% by weight.

**29.** An article according to any preceding claim, wherein the total amount of said monofunctional monomers present is from 2% to 10%.

**30.** An article according to any preceding claim, wherein the total amount of said monofunctional monomers present is from 4% to 8% by weight.

**31.** An article according to any preceding claim, wherein the ratio of the total amount of monofunctional comonomers to polyfunctional crosslinker monomer is 1 to 10 by weight.

**32.** An article according to any preceding claim, wherein the ratio of the total amount of monofunctional comonomers to polyfunctional crosslinker monomer is 2 to 6 by weight.

**33.** An article according to any preceding claim, wherein said polymer coating is hydrophilic.

**34.** An article according to any preceding claim, wherein said article is porous, and said polymer coating has a biomolecule binding of less than 30 microgram per square centimeter measured by the IgG binding test.

**35.** An article according to any preceding claim, wherein said article is porous, and said polymer coating has TOC extractables of less than 1 microgram of extractable matter per square centimeter of coating as measured by the TOC Extractables test.

**36.** An article according to any preceding claim, wherein said article is porous, and polymer coating has TOC extractables of less than 2 micrograms of extractable matter per square centimeter of coating as measured by the NVR Extractables test.

**37.** An article according to any preceding claim, wherein said polymer coating has caustic resistance of less than 1.3 as measured by the Flow Time Measurement test.

**38.** An article according to any of claims 1 to 33, wherein said article is nonporous, and said polymer coating has a biomolecule binding of less than 0.30 microgram per square centimeter measured by the IgG binding test.

**39.** An article according to any of claims 1 to 33, wherein said article is nonporous, and said polymer coating has a negative BSA-Ponseau test.

**40.** An article according to any of claims 1 to 33, wherein said article is nonporous, and said polymer coating has TOC extractables of less than 0.01 microgram cf extractable matter per square centimeter of coating as measured by the TOC Extractables test.

**41.** An article according to any of claims 1 to 33, wherein said article is nonporous, and polymer coating has TOC extractables of less than 0.02 micrograms of extractable matter per square centimeter of coating as measured by the NVR Extractables test.

**42.** A method for the preparation of an article having a biomolecule resistant surface coating, said method comprising the steps of:

(a) providing an article having a surface;
(b) optionally contacting said surface of said article with a wetting liquid to wet said surface thereof;
c) optionally displacing said wetting liquid with a second wetting liquid, leaving said article wetted with said second liquid;
(d) contacting said surface of said article with a solution containing:

(1) at least two monofunctional monomers selected from the group consisting of acrylamides, methacrylamides, and N-vinyl pyrrolidones; and
(2) at least one polyfunctional monomer selected from the group consisting of polyfunctional acrylamides, polyfunctional methacrylamides and diacroyl piperazines;

said solution optionally further comprising one or more polymerization initiators; and
(e) polymerizing said monomers to form said heat stable biomolecule resistant surface comprising a crosslinked

multipolymer.

**43.** A method for increasing the biocompatibility of an article comprising the step of coating at least one surface of said article, said coating comprising a crosslinked multipolymer, said crosslinked multipolymer comprising:

at least one polyfunctional moncmer selected from the group consisting of polyfunctional acrylamides, polyfunctional methacrylamides, and diacroylpiperazines; and
at least two monofunctional monomers selected from the group consisting of acrylamides, methacrylamides, and N-vinyl pyrrolidones.

**44.** A method according to claim 42 or 43, wherein said article is an article of labware, a medical article, a beverage fluid container or conduit, a marine article, or a plumbing article.

**45.** A method according to any of claims 42 to 44, wherein said article is an article of labware.

**46.** A method according to claim 45, wherein said article of labware is a cuvette, a cuvette cap, a round, conical or cylindrical flask, a beaker, a centrifuge tube, a centrifuge bottle, a chromatography column, a cylinder, a graduated cylinder, an incubation chamber, a fermentation chamber, a pipette, a replaceable pipette tip, a multiwell plate, a weighing boat, a media filter, dialysis tubing, laboratory tubing, pump tubing, a syringe, a syringe needle, a burette, a mold for electrophoresis tubes or gels, an electrophoresis apparatus, a blotter, a sequencer, a gel staining tray, a filter unit, a funnel, a hybridization tube, a shaker flask, a cell culture flask, a cell culture tube, a culture vessel, a culture dish, a cloning cylinder, a media bottle, or a media jar.

**47.** A method according to any of claims 42 to 44, wherein said article is a medical article.

**48.** An method according to claim 47, wherein said medical article is a biosensor, an implant, a catheter, a wound dressing, a contact lense, an implantable lens or a dermal patch.

**49.** A method according to any of claims 42 to 44, wherein said article is a beverage fluid container or conduit.

**50.** A method according to any of claims 42 to 44, wherein said article is a marine article.

**51.** A method according to claim 50, wherein said marine article is a boat.

**52.** A method according to claim 50, wherein said marine article is an article of boating equipment.

**53.** A method according to claim 42 or 43, wherein said article is an aquarium, an aquarium article, or an article of plumbing.

**54.** A method according to any of claims 42 to 53, wherein said coating is biomolecule resistant.

**55.** A method according to any of claims 42 to 54, wherein said coating is biomolecule resistant as determined by the IgG binding test.

**56.** A method according to any of claims 42 to 55, wherein said coating is biomolecule resistant as determined by the BSA-Ponseau test.

**57.** A method according to any of claims 42 to 56, wherein said coating is heat stable.

**58.** A method according to any of claims 42 to 57, wherein said coating is caustic resistant.

**59.** A method according to any of claims 42 to 58, wherein said coating is a clean coating.

**60.** An method according to claims 42 to 59, wherein said coating is a polymer coating.

**61.** A method according to any of claims 42 to 60, wherein said coating is a hydrogel.

**62.** A method according to any of claims 42 to 61, wherein said crosslinked multipolymer comprises at least one monofunctional monomer that is acrylamide, wherein the acrylamide nitrogen of said acrylamide is substituted with at least one gem dialkyl substituted carbon.

**63.** An method according to any of claims 42 to 62, wherein said crosslinked multipolymer is a copolymer formed from dimethylacrylamide, diacetone acrylamide, and methylene-bis-acrylamide.

**64.** A method according to any of claims 42 to 61, wherein said crosslinked multipolymer is a copolymer formed from methylene-bis-acrylamide, N-vinyl pyrrolidone, and either of dimethylacrylamide or diacetone acrylamide.

**65.** A method according to any of claims 42 to 61, wherein said coating is a separately formed surface coating; said surface coating comprising a crosslinked multipolymer; said crosslinked multipolymer comprising:

at least one polyfunctional monomer selected from the group consisting of polyfunctional acrylamide monomers, polyfunctional methacrylamide monomers, and diacroylpiperazines; and
at least two different monofunctional monomers selected from the group of N-vinyl pyrrolidone monomers and monomers having the formula:

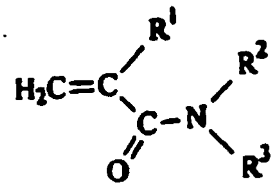

wherein:

$R^1$ is H or $CH_3$,
$R^2$ is H or $C_1$-$C_6$, preferably $C_1$-$C_3$ alkyl, either linear or branched,
$R^3$ is H or $C_1$-$C_6$, preferably $C_1$-$C_3$ alkyl, either linear or branched, or

$C(CH_3)_2CH_2C(=O)CH_3$, or $(P=O)((NCH_3)_2)_2$, or $C=ON(CH_3)_2$, or $CH_2$-O-$R^4$, where $R^4$ is $C_1$-$C_5$ alkyl, either linear or branched, or $(CH_2$-$CH_2$-O)n-$R^5$, where $R^5$ is -H or -$CH_3$, and n=2 or 3, ; provided that $R^2$ and $R^3$ are not simultaneously H.

**66.** A method according to any of claims 42 to 65, wherein said crosslinked multipolymer further comprises a supplemental property modifying monomer.

**67.** A method according to claim 66, wherein said supplemental property modifying monomer is selected from the group consisting of (3-(methacryloylamino)propyl)trimethylammonium chloride, (3-acrylamidopropyl)trimethylammonium chloride, 2-acrylamido-2-methyl-1-propanesulfonic acid and aminopropylmethacrylamide.

**68.** A method according to any of claims 42 to 67, wherein two of said monofunctional monomers are present in the ratio of 1 to 5 by weight.

**69.** An method according to any of claims 42 to 68, wherein two of said monofunctional monomers are present in the molar ratio of 1 to 2.

**70.** A method according to any of claims 42 to 69, wherein the total amount of said monofunctional monomers present is from 0.5% to 20% by weight.

**71.** A method according to any of claims 42 to 70, wherein the total amount of said monofunctional monomers present is from 2% to 10%.

**72.** A method according to any of claims 42 to 71, wherein the total amount of said monofunctional monomers present is from 4% to 8% by weight.

**73.** A method according to any of claims 42 to 72, wherein the ratio of the total amount of monofunctional comonomers to polyfunctional crosslinker monomer is 1 to 10 by weight.

**74.** A method according to any of claims 42 to 73, wherein the ratio of the total amount of monofunctional comonomers to polyfunctional crosslinker monomer is 2 to 6 by weight.

**75.** A method according to any of claims 42 to 74, wherein said polymer coating is hydrophilic.

**76.** A method according to any of claims 42 to 75, wherein said article is porous, and said polymer coating has a biomolecule binding of less than 30 microgram per square centimeter measured by the IgG binding test.

**77.** A method according to any of claims 42 to 76, wherein said article is porous, and said polymer coating has TCC extractables of less than 1 microgram of extractable matter per square centimeter of coating as measured by the TOC Extractables test.

**78.** A method according to any of claims 42 to 77, wherein said article is porous, and polymer coating has TOC extractables of less than 2 micrograms of extractable matter per square centimeter of coating as measured by the NVR Extractables test.

**79.** A method according to any of claims 42 to 78, wherein said polymer coating has caustic resistance of less than 1.3 as measured by the Flow Time Measurement test.

**80.** An method according to any of claims 42 to 77, wherein said article is nonporous, and said polymer coating has a biomolecule binding of less than 0.30 microgram per square centimeter measured by the IgG binding test.

**81.** A method according to any of claims 42 to 77, wherein said article is nonporous, and said polymer coating has a negative BSA-Ponseau test.

**82.** A method according to any of claims 42 to 77, wherein said article is nonporous, and said polymer coating has TOC extractables of less than 0.01 microgram of extractable matter per square centimeter of coating as measured by the TOC Extractables test.

**83.** A method according to any of claims 42 to 77, wherein said article is nonporous, and polymer coating has TOC extractables of less than 0.02 micrograms of extractable matter per square centimeter of coating as measured by the NVR Extractables test.

**Patentansprüche**

**1.** Ein Gegenstand mit einer Beschichtung, wobei diese Beschichtung ein vernetztes Multipolymer aufweist und dieses vernetzte Multipolymer enthält:

mindestens ein polyfunktionales Monomer ausgewählt aus der Gruppe, die besteht aus polyfunktionalen Acrylamiden, polyfunktionalen Metacrylamiden und Diakrolpiperazinen; und
mindestens zwei monofunktionale Monomere, ausgewählt aus der Gruppe bestehend aus Acrylamiden, Methacrylamiden und N-Vinylpyrrolidonen.

**2.** Ein Artikel nach Anspruch 1, worin dieser Artikel ein Artikel der Laborwaren, ein medizinischer Artikel, ein Behälter oder eine Leitung für Getränkeflüssigkeit, ein Marineartikel oder ein Klempnerartikel ist.

**3.** Ein Artikel nach Anspruch 1 oder 2, worin dieser Artikel ein Artikel der Laborwaren ist.

**4.** Ein Artikel nach Anspruch 3, worin dieser Artikel der Laborwaren eine Ruvette, eine Kuvettenkappe, ein Rundstab, ein konisches oder zylinderförmiges Kolbengefäß, ein Becherglas, eine Zentrifugenröhre, eine zentrifugenflasche, eine Chromatografiesäule, ein Zylinder, ein gestufter Zylinder, eine Inkubationskammer, eine Fermentationskammer, ein Pipette, eine austauschbare Pipettenspitze, eine Platte mit einer Mehrzahl von Bohrungen, ein Wägeschiffchen, ein Mediumfilter, ein Dialyse-Rohrsystem, ein Rohrsystem für Laboratorien, ein Pumpenrohrsystem, eine Spritze, eine Nadel für eine Spritze, eine Bürette, eine Form für Röhren oder Gele für die Elektrophorese, ein Gerät für die

Elektrophorese, eine Lösch- bzw. Aufsaugeinrichtung (Blotter), ein Sequencer, ein Gelhydrierkorb, eine Filtereinheit, ein Trichter, eine Hybridisierungsröhre, ein Shaker-Gefäß, ein Gefäß für Zellkulturen, eine Röhre für Zellkulturen, ein Gefäß für Kulturen, ein Schale für Kulturen, einen Zylinder zum Klonen, eine Flasche oder einen Krug für Medien ist.

**5.** Ein Artikel nach irgendeinem der Ansprüche 1 bis 4, worin dieser Artikel ein medizinischer Artikel ist.

**6.** Ein Artikel nach Anspruch 5, worin dieser medizinische Artikel ein Biosensor, ein Implantat, ein Katheter, ein Wundverband, eine Kontaktlinse, eine implantierbare Linse oder ein Hautflecken ist.

**7.** Ein Artikel nach Anspruch 1 oder 2, worin dieser Artikel ein Behälter oder eine Leitung für Getränkeflüssigkeit ist.

**8.** Ein Artikel nach Anspruch 1 oder 2, worin dieser Artikel ein Marineartikel ist.

**9.** Artikel nach Anspruch 8, worin dieser Marineartikel ein Schiff ist.

**10.** Ein Artikel nach Anspruch 8, worin dieser Marineartikel ein Artikel der Schiffsausrüstung ist.

**11.** Ein Artikel nach Anspruch 1, worin dieser Artikel ein Aquarium, eine Aquariumartikel oder ein Artikel für die Klempnerei ist.

**12.** Ein Artikel nach irgendeinem der vorstehenden Ansprüche, worin diese Beschichtung resistent gegenüber Biomolekülen ist.

**13.** Ein Artikel nach irgendeinem der vorstehenden Ansprüche, worin diese Beschichtung gemäß des IgG-Bindungstests resistent gegenüber Biomolekülen ist.

**14.** Ein Artikel nach irgendeinem der vorstehenden Ansprüche, worin diese Beschichtung gemäß des BSA-Ponseau-Tests resistent gegenüber Biomolekülen ist.

**15.** Ein Artikel nach irgendeinem der vorstehenden Ansprüche, worin diese Beschichtung hitzestabil ist.

**16.** Ein Artikel gemäß irgendeinem der vorstehenden Ansprüche, worin diese Beschichtung eine kaustische Resistenz aufweist.

**17.** Ein Artikel gemäß irgendeinem der vorstehenden Ansprüche, worin diese Beschichtung eine Reinbeschichtung ist.

**18.** Ein Artikel gemäß irgendeinem der vorstehenden Ansprüche, worin dieser Beschichtung eine Polymer-Beschichtung ist.

**19.** Ein Artikel gemäß irgendeinem der vorstehenden Ansprüche, worin diese Beschichtung ein Hydrogel ist.

**20.** Ein Artikel gemäß irgendeinem der vorstehenden Ansprüche, worin dieses vernetzte Multipolymer mindestens ein monofunktionales Monomer enthält, das Acrylamid ist, worin der Acrylamid-Stickstoff von diesem Acrylamid substituiert ist mit mindestens einem gem-Dialkyl substituierten Kohlenstoff.

**21.** Ein Artikel gemäß irgendeinem der vorstehenden Ansprüche, worin dieses vernetzte Multipolymer ein Copolymer ist, gebildet aus Dimethylacrylamid, Diaceton-Arcrylamid und Methylen-bis-Arcylamid gebildet worden ist.

**22.** Ein Artikel gemäß irgendeinem der Ansprüche 1 bis 19, worin dieses vernetzte Multipolymer ein Copolymer ist, gebildet aus Methylen-bis-Arcylamid, N-Vinyl-Pyrrolidon und entweder Dimethylacrylamid oder Diacetonacrylamid.

**23.** Ein Artikel gemäß irgendeinem der Ansprüche 1 bis 19, worin diese Beschichtung eine separat ausgebildete Oberflächenbeschichtung ist; diese Oberflächenbeschichtung ein vernetztes Multipolymer enthält; dieses vernetzte Multipolymer besteht aus:

mindestens einem polyfunktionalen Polymer ausgewählt aus der Gruppe bestehend aus polyfunktionalen Acrylamidmonomeren, polyfunktionalen Methacrylamid-Monomeren und Diacrylpiperazinen; und

mindestens zwei unterschiedliche monofunktionale Monomere, ausgewählt aus der Gruppe der N-Vinyl-Pyrrolidone-Monomere mit der Formel:

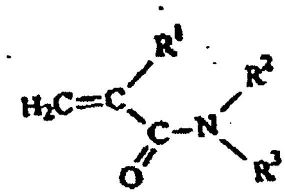

worin:

$R_1$ ist H oder $CH_3$,
$R_2$ ist H oder $C_1$-$C_6$, bevorzugt $C_1$-$C_3$-Alkyl, entweder linear oder verzweigt,
$R_3$ ist H oder $C_1$-$C_6$, bevorzugt $C_1$-$C_3$-Alkyl, entweder linear oder verzweigt, oder

$C(CH_3)_2CH_2C(=O)CH_3$, oder $(P=0)((NCH_3)_2)_2$, oder $C=ON(CH_3)_2$ oder $CH_2$-O-$R^4$, worin $R^4$ $C_1$-$C_5$ Alkyl ist, entweder linear oder verzweigt, oder $(CH_2$-$CH_2$-O)n-$R^5$, worin $R^5$ -H oder -$CH_3$ ist, und n=2 oder 3; vorausgesetzt, daß $R^2$ und $R^3$ nicht gleichzeitig H sind.

**24.** Ein Artikel gemäß irgendeinem der vorstehenden Ansprüche, worin dieses vernetzte Multipolymer des weiteren ein eigenschaftsmodifizierendes Ergänzungsmonomer aufweist.

**25.** Ein Artikel gemäß Anspruch 24, worin dieses eigenschaftsmodifizierende Ergänzungsmonomer ausgewählt ist aus der Gruppe bestehend aus (3-Methacryloylamino)prophyl)trimethylammonium-Chlorid, (3-Acrylamidopropyl)trimethylammonium-Chlorid, 2-Acrylamido-2-Methyl-1-Propansulfon-Säure und Aminopropylmethacrylamid.

**26.** Ein Artikel gemäß irgendeinem der vorstehenden Ansprüche, worin zwei von diesen monofunktionalen Monomeren vorhanden sind in einem Gewichtsverhältnis von etwa 1 bis etwa 5.

**27.** Ein Artikel gemäß irgendeinem der vorstehenden Ansprüche, worin zwei von diesen monofunktionalen Monomeren vorhanden sind in einem Molverhältnis von etwa 1 bis etwa 2.

**28.** Ein Artikel gemäß irgendeinem der vorstehenden Ansprüche, worin die gesamte Menge von diesen monofunktionalen Monomeren vorhanden ist von etwa 0,5% bis etwa 20% des Gewichtes.

**29.** Ein Artikel gemäß irgendeinem der vorstehenden Ansprüche, worin die gesamte Menge von diesen monofunktionalen Monomeren vorhanden ist von etwa 2% bis etwa 10%.

**30.** Ein Artikel gemäß irgendeinem der vorstehenden Ansprüche, worin die gesamte Menge von diesen monofunktionalen Monomeren vorhanden ist von etwa 4% bis etwa 8% des Gewichtes.

**31.** Ein Artikel gemäß irgendeinem der vorstehenden Ansprüche, worin das Verhältnis der gesamten Menge der monofunktionalen Comonomere zu dem polyfunktionalen vernetzten Monomer etwa 1 bis 10 bezogen auf das Gewicht beträgt.

**32.** Ein Artikel gemäß einem der vorstehenden Ansprüche, worin das Verhältnis von der gesamten Menge von monofunktionalen Copolymeren zu dem polyfunktionalen vernetzten Monomer etwa 2 bis etwa 6 bezogen auf das Gewicht beträgt.

**33.** Ein Artikel gemäß irgendeinem der vorstehenden Ansprüche, worin diese Polymerbeschichtung hydrophil ist.

**34.** Ein Artikel gemäß irgendeinem der vorstehenden Ansprüche, worin dieser Artikel porös ist und diese Polymer-Beschichtung eine biomolekulare Bindung von weniger als etwa 30 Mikrogramm pro $cm^2$ aufweist, und zwar gemessen nach dem IgG-Verbindungtest.

**35.** Ein Artikel gemäß irgendeinem der vorstehenden Ansprüche, worin dieser Artikel porös ist und diese Polymer-Beschichtung TOC-extrahierbares Material von weniger als etwa 1 Mikrogramm von extrahierbaren Material pro $cm^2$ der Beschichtung aufweist, und zwar gemessen nach dem TOC-extrahierbaren Material Test.

**36.** Ein Artikel gemäß irgendeinem der vorstehenden Ansprüche, worin dieser Artikel porös ist und diese Polymer-Beschichtung TOC-extrahierbares Material von weniger als etwa 2 Mikrogramm von extrahierbaren Material pro $cm^2$ der Beschichtung aufweist, und zwar gemessen nach dem NVR-extrahierbaren Material Test.

**37.** Ein Artikel gemäß irgendeinem der vorstehenden Ansprüche, worin diese Polymer-Beschichtung eine kaustische Resistenz von weniger als etwa 1,3 aufweist, und zwar gemessen mit dem Fließzeit-Meßtest.

**38.** Ein Artikel gemäß irgendeinem der Ansprüche 1 bis 33, worin dieser Artikel nichtporös ist und dieser Polymer-Beschichtung eine biomolekulare Bindung von weniger als etwa 0,3 Mikrogramm pro $cm^2$ aufweist, und zwar gemessen mit dem IgG-Bindungstest.

**39.** Ein Artikel gemäß irgendeinem der Ansprüche 1 bis 33, worin dieser Artikel nichtporös ist und diese Polymer-Beschichtung einen negativen BSA-Ponseau-Test aufweist.

**40.** Ein Artikel gemäß irgendeinem der Ansprüche 1 bis 33, worin dieser Artikel nichtporös ist und diese Polymer-Beschichtung TOC-extrahierbares Material von weniger als etwa 0,01 Mikrogramm von extrahierbaren Material pro $cm^2$ der Beschichtung aufweist, und zwar gemessen nach dem TOC-extrahierbaren Material Test.

**41.** Ein Artikel gemäß irgendeinem der Ansprüche 1 bis 33, worin dieser Artikel nichtporös ist und diese Polymer-Beschichtung TOC-extrahierbares Material von weniger als etwa 0,02 Mikrogramm von extrahierbaren Material pro $cm^2$ der Beschichtung aufweist, und zwar gemessen nach dem NVR-extrahierbaren Material Test.

**42.** Ein Verfahren zur Herstellung eines Artikel, das gegenüber Biomolekülen eine resistente Oberflächenbeschichtung aufweist, wobei dieses verfahren folgende Schritte aufweist:

(a) zur Verfügung stellen eines Artikels, der eine Oberfläche hat;
(b) optionales Kontaktieren dieser Oberfläche von diesem Artikel mit einer benetzenden Flüssigkeit, um diese Oberfläche davon zu benetzen;
(c) optionales Ersetzen dieser benetzenden Flüssigkeit durch eine zweite benetzende Flüssigkeit, wobei dieser Artikel mit dieser zweiten Flüssigkeit benetzt verbleibt;
(d) Kontaktieren dieser Oberfläche von diesem Artikel mit einem Lösungsmittel, welches enthält:

(1) mindestens zwei monofunktionale Monomere ausgewählt aus der Gruppe bestehend aus Acrylamiden, Methacrylamiden und N-Vinyl-Pyrrolidonen; und
(2) mindestens ein polyfunktionales Monomer ausgewählt aus der Gruppe bestehend aus polyfunktionalen Acrylamiden, polyfunktionalen Methacrylamiden und Diacrylpiperazinen;

wobei dieses Lösungsmittel optional des weiteren einen oder mehrere Polymerisationsinitiatoren enthält; und
(e) Polymerisieren dieser Monomere, um diese hitzestabile und gegenüber Biomoleküle eine Resistenz aufweisende Oberfläche auszubilden, die ein vernetztes Multipolymer aufweist.

**43.** Ein Verfahren zur Erhöhung der Biokompatibilität eines Artikels enthaltend den Schritt des Beschichtens von zumindest einer Oberfläche von diesem Artikel, wobei diese Beschichtung ein vernetztes Multipolymer aufweist und dieses vernetzte Multipolymer enthält:

mindestens ein polyfunktionales Monomer ausgewählt aus der Gruppe, die besteht aus polyfunktionalen Acrylamiden, polyfunktionalen Metacrylamiden und Diakroylpiperazinen; und
mindestens zwei monofunktionale Monomere, ausgewählt aus der Gruppe bestehend aus Acrylamiden, Methacrylamiden und N-Vinylpyrrolidonen.

**44.** Verfahren nach Anspruch 42 oder 43, worin dieser Artikel ein Artikel der Laborware, ein medizinischer Artikel, ein Behälter oder eine Leitung für Getränkeflüssigkeit, ein Marineartikel oder ein Klempnerartikel ist.

**45.** Ein Verfahren nach irgendeinem der Ansprüche 42 bis 44, worin dieser Artikel ein Artikel der Laborwaren ist.

**46.** Ein Verfahren nach Anspruch 45, worin dieser Artikel der Laborware eine Kuvette, eine Kuvettenkappe, ein Rundstab, ein konisches oder zylinderförmiges Kolbengefäß, ein Becherglas, eine Zentrifugenröhre, eine Zentrifugenflasche, eine Chromatografiesäule, ein Zylinder, ein gestufter Zylinder, eine Inkubationskammer, eine Fermentationskammer, ein Pipette, eine austauschbare Pipettenspitze, eine Platte mit einer Mehrzahl von Bohrungen, ein Wägeschiffchen, ein Mediumfilter, ein Dialyse-Rohrsystem, ein Rohrsystem für Laboratorien, ein Pumpenrohrsystem, eine Spritze, eine Nadel für eine Spritze, eine Bürette, eine Form für Röhren oder Gele für die elektrophorese, ein Gerät für die Elektrophorese, eine Lösch- bzw. Aufsaugeinrichtung (Blotter), ein Sequencer, ein Gelhydrierkorb, eine Filtereinheit, ein Trichter, eine Hybridisierungsröhre, ein Shaker-Gefäß, ein Gefäß für Zellkulturen, eine Röhre für Zellkulturen, ein Gefäß für Kulturen, ein Schale für Kulturen, einen Zylinder zum Klonen, eine Flasche oder einen Krug für Medien ist.

**47.** Ein Verfahren nach irgendeinem der Ansprüche 42 bis 44, worin dieser Artikel ein medizinischer Artikel ist.

**48.** Ein Verfahren nach Anspruch 47, dieser medizinische Artikel ein Biosensor, ein Implantat, ein Katheter, ein Wundverband, eine Kontaktlinse, eine implantierbare Linse oder ein Hautflecken ist.

**49.** Ein Verfahren nach irgendeinem der Ansprüche 42 bis 44, worin dieser Artikel ein Behälter oder eine Leitung für Getränkeflüssigkeit ist.

**50.** Ein Verfahren nach irgendeinem der Ansprüche 42 bis 44, worin dieser Artikel ein Marineartikel ist.

**51.** Ein Verfahren gemäß Anspruch 50, worin dieser Marineartikel ein Schiff ist.

**52.** Ein Verfahren nach Anspruch 50, worin dieser Marineartikel ein Artikel der Schiffsausrüstung ist.

**53.** Ein Verfahren nach Anspruch 42 oder 43, worin dieser Artikel ein Aquarium, eine Aquariumartikel oder ein Artikel für die Klempnerei ist.

**54.** Ein Verfahren nach irgendeinem der Ansprüche 42 bis 53, worin diese Beschichtung resistent gegenüber Biomolekülen ist.

**55.** Ein Verfahren nach irgendeinem der Ansprüche 42 bis 54, worin diese Beschichtung gemäß des IgG-Bindungstest resistent gegenüber Biomolekülen ist.

**56.** Ein Verfahren nach irgendeinem der Ansprüche 42 bis 55, worin diese Beschichtung gemäß des BSA-Ponseau-Tests resistent gegenüber Biomolekülen ist.

**57.** Ein Verfahren nach irgendeinem der Ansprüche 42 bis 56, worin diese Beschichtung hitzestabil ist.

**58.** Ein Verfahren gemäß irgendeinem der Ansprüche 42 bis 57, worin diese Beschichtung eine kaustische Resistenz aufweist.

**59.** Ein Verfahren gemäß irgendeinem der Ansprüche 42 bis 58, worin diese Beschichtung eine Reinbeschichtung ist.

**60.** Ein Verfahren gemäß irgendeinem der Ansprüche 42 bis 59, worin diese Beschichtung eine Polymer-Beschichtung ist.

**61.** Ein Verfahren gemäß irgendeinem der Ansprüche 42 bis 60, worin diese Beschichtung ein Hydrogel ist.

**62.** Ein Verfahren gemäß irgendeinem der Ansprüche 42 bis 61, worin dieses vernetzte Multipolymer mindestens ein monofunktionales Monomer enthält, das Acrylamid ist, worin der Acrylamid-Stickstoff von diesem Acrylamid substituiert ist mit mindestens einem *gem*-Dialkyl substituierten Kohlenstoff.

**63.** Ein Verfahren gemäß irgendeinem der Ansprüche 42 bis 62, worin dieses vernetzte Multipolymer ein Copolymer ist, gebildet aus Dimethylacrylamid, Diaceton-Arcrylamid und Methylen-bis-Arcylamid gebildet worden ist.

**64.** Ein Verfahren gemäß irgendeinem der Ansprüche 42 bis 61, worin dieses vernetzte Multipolymer ein Copolymer ist, gebildet aus Methylen-bis-Arcylamid, N-Vinyl-Pyrrolidon und entweder Dimethylacrylamid oder Diacetonacrylamid.

**65.** Ein Verfahren gemäß irgendeinem der Ansprüche 42 bis 61, worin diese Beschichtung eine separat ausgebildete Oberflächenbeschichtung ist; diese Oberflächenbeschichtung ein vernetztes Multipolymer enthält; dieses vernetzte Multipolymer besteht aus:

mindestens einem polyfunktionalen Polymer ausgewählt aus der Gruppe bestehend aus polyfunktionalen Acrylamidmonomeren, polyfunktionalen Methacrylamid-Monomeren und Diacrylpiperazine; und
mindestens zwei unterschiedlichen monofunktionalen Monomeren, ausgewählt aus der Gruppe der N-Vinyl-Pyrroli done-Monomere mit der Formel:

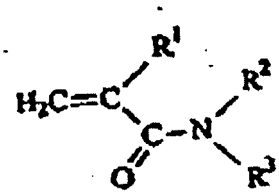

worin:

$R_1$ ist H oder $CH_3$,
$R_2$ ist H oder $C_1$-$C_6$, bevorzugt $C_1$-$C_3$-Alkyl, entweder linear oder verzweigt,
$R_3$ ist H oder $C_1$-$C_6$, bevorzugt $C_1$-$C_3$-Alkyl, entweder linear oder verzweigt, oder $C(CH_3)_2CH_2C(=0)CH_3$, oder $(P=0)((NCH_3)_2)_2$, oder $C=ON(CH_3)_2$ oder $CH_2$-O-$R^4$, worin $R^4$ $C_1$-$C_5$ Alkyl ist, entweder linear oder verzweigt, oder $(CH_2$-$CH_2$-O)n-$R^5$, worin $R^5$ -H oder -$CH_3$ ist, und n=2 oder 3; vorausgesetzt, daß $R^2$ und $R^3$ nicht gleichzeitig H sind.

**66.** Ein Verfahren gemäß irgendeinem der Ansprüche 42 bis 65, worin dieses vernetzte Multipolymer des weiteren ein eigenschaftsmodifizierendes Ergänzungsmonomer aufweist.

**67.** Ein Verfahren gemäß Anspruch 66, worin dieses eigenschaftsmodifizierende Ergänzungsmonomer ausgewählt ist aus der Gruppe bestehend aus (3-Methacryloylamino)prophyl)trimethylammonium-Chlorid, (3-Acrylamidopropyl) trimethylammonium-chlorid, 2-Acrylamido-2-Methyl-1-Propansulfon-Säure und Aminopropylmethacrylamid.

**68.** Ein Verfahren gemäß irgendeinem der Ansprüche 42 bis 67, worin zwei von diesen monofunktionalen Monomeren vorhanden sind in einem Gewichtsverhältnis von etwa 1 bis etwa 5.

**69.** Ein Verfahren gemäß irgendeinem der Ansprüche 42 bis 68, worin zwei von diesen monofunktionalen Monomeren vorhanden sind in einem Molverhältnis von etwa 1 bis etwa 2.

**70.** Ein Verfahren gemäß irgendeinem der Ansprüche 42 bis 69, worin die gesamte Menge von diesen monofunktionalen Monomeren vorhanden sind von etwa 0,5% bis etwa 20% des Gewichtes.

**71.** Ein Verfahren gemäß irgendeinem der Ansprüche 42 bis 70, worin die gesamte Menge von diesen monofunktionalen Monomeren vorhanden ist von etwa 2% bis etwa 10%.

**72.** Ein Verfahren gemäß irgendeinem der Ansprüche 42 bis 71, worin die gesamte Menge von diese monofunktionalen Monomeren vorhanden ist von etwa 4% bis etwa 8% des Gewichtes.

**73.** Ein Verfahren gemäß irgendeinem der Ansprüche 42 bis 72, worin das Verhältnis der gesamten Menge der monofunktionalen Comonomere zu dem polyfunktionalen vernetzten Monomer etwa 1 bis 10 bezogen auf das Gewicht beträgt.

**74.** Ein Verfahren gemäß einem der Ansprüche 42 bis 73, worin das Verhältnis von der gesamten Menge von monofunktionalen Copolymeren zu dem polyfunktionalen vernetzten Monomer etwa 2 bis etwa 6 bezogen auf das Gewicht beträgt.

**75.** Ein Verfahren gemäß irgendeinem der Ansprüche 42 bis 74, worin diese Polymerbeschichtung hydrophil ist.

**76.** Ein Verfahren gemäß irgendeinem der Ansprüche 42 bis 75, worin dieser Artikel porös ist und diese Polymer-Beschichtung eine biomolekulare Bindung von weniger als etwa 30 Mikrogramm pro $cm^2$ aufweist, und zwar gemessen nach dem IgG-verbindungtest.

**77.** Ein Verfahren gemäß irgendeinem der Ansprüche 42 bis 76, worin dieser Artikel porös ist und diese Polymer-Beschichtung TOC-extrahierbares Material von weniger als etwa 1 Mikrogramm von extrahierbaren Material pro $cm^2$ der Beschichtung aufweist, und zwar gemessen nach dem TOC-extrahierbaren Material Test.

**78.** Ein Verfahren gemäß irgendeinem der Ansprüche 42 bis 77, worin dieser Artikel porös ist und diese Polymer-Beschichtung TOC-extrahierbares Material von weniger als etwa 2 Mikrogramm von extrahierbaren Material pro $cm^2$ der Beschichtung aufweist, und zwar gemessen nach dem NVR-extrahierbaren Material Test.

**79.** Ein Verfahren gemäß irgendeinem der Ansprüche 42 bis 78, worin diese Polymer-Beschichtung eine kaustische Resistenz von weniger als etwa 1,3 aufweist, und zwar gemessen mit dem Fließzeit-Meßtest.

**80.** Ein Verfahren gemäß irgendeinem der Ansprüche 42 bis 77, worin dieser Artikel nichtporös ist und dieser Polymer-Beschichtung eine biomolekulare Bindung von weniger als etwa 0,3 Mikrogramm pro $cm^2$ aufweist, und zwar gemessen mit dem IgG-Bindungstest.

**81.** Ein Verfahren gemäß irgendeinem der Ansprüche 42 bis 77, worin dieser Artikel nichtporös ist und diese Polymer-Beschichtung einen negativen BSA-Ponseau-Test aufweist.

**82.** Ein Artikel gemäß irgendeinem der Ansprüche 42 bis 77, worin dieser Artikel nichtporös ist und diese Polymer-Beschichtung TOC-extrahierbares Material von weniger als etwa 0,01 Mikrogramm von extrahierbaren Material pro $cm^2$ der Beschichtung aufweist, und zwar gemessen nach dem TOC-extrahierbaren Material Test.

**83.** Ein Verfahren gemäß irgendeinem der Ansprüche 42 bis 77, worin dieser Artikel nichtporös ist und diese Polymer-Beschichtung TOC-extrahierbares Material von weniger als etwa 0,02 Mikrogramm von extrahierbaren Material pro $cm^2$ der Beschichtung aufweist, und zwar gemessen nach dem NVR-extrahierbaren Material Test.

## Revendications

**1.** Article comprenant un revêtement, ledit revêtement comprenant un multipolymère réticulé, ledit multipolymère réticulé comprenant :

au moins un monomère polyfonctionnel choisi dans le groupe constitué par les acrylamides polyfonctionnels, les méthacrylamides polyfonctionnels et les diacroylpipérazines ; et
au moins deux monomères monofonctionnels choisis dans le groupe constitué par les acrylamides, les méthacrylamides et les N-vinylpyrrolidones.

**2.** Article selon la revendication 1, dans lequel ledit article est un article de verrerie de laboratoire, un article médical, un récipient ou une conduite de boisson fluide, un article nautique ou un article de plomberie.

**3.** Article selon la revendication 1 ou 2, dans lequel ledit article est un article de verrerie de laboratoire.

**4.** Article selon la revendication 3, dans lequel ledit article de verrerie de laboratoire est un pot de coulée, un bouchon de pot de coulée, un ballon rond, conique ou cylindrique, un bécher, un tube de centrifugation, une bouteille de centrifugation, un colonne de chromatographie, un cylindre, un cylindre gradué, une chambre d'incubation, une chambre de fermentation, une pipete, une extrémité de pipette remplaçable, une plaque à plusieurs puits, un nacelle de pesée, un filtre à milieux, une tuyauterie de dialyse, une tuyauterie de laboratoire, une tuyauterie de pompage, un seringue, une aiguille de seringue, une burette, un moule pour des tubes ou des gels d'électrophorèse, un appareil d'électrophorèse, un dispositif d'analyse par transfert, un dispositif d'analyse de séquences, un plateau de coloration de gel, une unité de filtration, un entonnoir, un tube d'hybridation, un ballon d'agitation, un ballon de culture de cellules, un tube de culture de cellules, un récipient de culture, une boîte de culture, un cylindre de clonage, une bouteille de milieux ou un bocal de milieux.

5. Article selon l'une quelconque des revendications 1 à 4, dans lequel ledit article est un article médical.

6. Article selon la revendication 5, dans lequel ledit article médical est un capteur biologique, un implant, un cathéter, un passement, une lentille de contact, une lentille implantable ou un timbre dermique.

7. Article selon la revendication 1 ou 2, dans lequel ledit article est un récipient ou une conduite de boisson fluide.

8. Article selon la revendication 1 ou 2, dans lequel ledit article est un article nautique.

9. Article selon la revendication 8, dans lequel ledit article nautique est un bateau.

10. Article selon la revendication 8, dans lequel ledit article nautique est un article d'équipement de bateau.

11. Article selon la revendication 1, dans lequel ledit article est un aquarium, un article d'aquarium ou un article de plomberie.

12. Article selon l'une quelconque des revendications précédentes, dans lequel ledit revêtement est résistant aux molécules biologiques.

13. Article selon l'une quelconque des revendications précédentes, dans lequel ledit revêtement est résistant aux molécules biologiques, comme déterminé par l'essai de liaison à l'IgG.

14. Article selon l'une quelconque des revendications précédentes, dans lequel ledit revêtement est résistant aux molécules biologiques, comme déterminé par l'essai de BSA-Ponseau.

15. Article selon l'une quelconque des revendications précédentes, dans lequel ledit revêtement est stable à la chaleur.

16. Article selon l'une quelconque des revendications précédentes, dans lequel ledit revêtement est résistant aux bases.

17. Article selon l'une quelconque des revendications précédentes, dans lequel ledit revêtement est un revêtement propre.

18. Article selon l'une quelconque des revendications précédentes, dans lequel ledit revêtement est un revêtement polymère.

19. Article selon l'une quelconque des revendications précédentes, dans lequel ledit revêtement est un hydrogel.

20. Article selon l'une quelconque des revendications précédentes, dans lequel ledit multipolymère réticulé comprend au moins un monomère monofonctionnel qui est un acrylamide, dans lequel l'atome d'azote de l'acrylamide dudit acrylamide est remplacé par au moins un atome de carbone dialkyl-substitué gem.

21. Article selon l'une quelconque des revendications précédentes, dans lequel ledit multipolymère réticulé est un copolymère formé à partir de diméthylacrylamide, de diacétoneacrylamide et de méthylène-bis-acrylamide.

22. Article selon l'une quelconque des revendications 1 à 19, dans lequel ledit multipolymère réticulé est un copolymère formé à partir de méthylène-bis-acrylamide, de N-vinylpyrrolidone et de diméthylacrylamide ou de diacétone acrylamide.

23. Article selon l'une quelconque des revendications 1 à 19, dans lequel ledit revêtement est un revêtement superficiel formé séparément ; ledit revêtement superficiel comprenant un multipolymère réticulé ; ledit multipolymère réticulé comprenant :

    au moins un monomère polyfonctionnel choisi dans le groupe constitué par les monomères acrylamide polyfonctionnels, les monomères méthacrylamide polyfonctionnels et les diacroylpipérazines ; et
    au moins deux monomères monofonctionnels différents choisis dans le groupe des monomères N-vinylpyrrolidone et les monomères répondant à la formule :

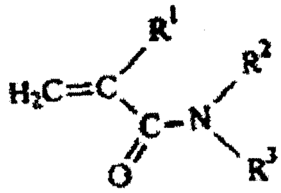

dans laquelle :

$R^1$ est H ou $CH_3$,
$R^2$ est H ou un groupe alkyle en $C_1$-$C_6$, de préférence en $C_1$-$C_3$, linéaire ou ramifié,
$R^3$ est H ou un groupe alkyle en $C_1$-$C_6$, de préférence en $C_1$-$C_3$, linéaire ou ramifié, ou $C(CH_3)_2CH_2C(=O)CH_3$ ou (P=O) $((NCH_3)_2)_2$ ou $C=ON(CH_3)_2$ ou $CH_2$-O-$R^4$, où $R^4$ est un groupe alkyle en $C_1$-$C_5$, linéaire ou ramifié, ou $(CH_2$-$CH_2$-$O)_n$-$R^5$, où $R^5$ est -H ou -$CH_3$, et n = 2 ou 3 ; à condition que $R^2$ et $R^3$ ne soient pas simultanément H.

**24.** Article selon l'une quelconque des revendications précédentes, dans lequel ledit multipalyméxe réticulé comprend en outre un monomère modifiant les propriétés supplémentaire.

**25.** Article selon la revendication 24, dans lequel ledit monomère modifiant les propriétés supplémentaire est choisi dans le groupe constitué par le chlorure de (3-(méthacryloylamino)propyl)triméthylammonium, le chlorure de 3-(acrylamidopropyl)triméthylammonium, l'acide 2-acrylamido-2-méthyl-1-propanesulfonique et l'aminopropylméthacrylamide.

**26.** Article selon l'une quelconque des revendications précédentes, dans lequel deux desdits monomères monofonctionnels sont présents dans un rapport de 1 à 5 en poids.

**27.** Article selon l'une quelconque des revendications précédentes, dans lequel deux desdits monomères monofonctionnels sont présents dans un rapport molaire de 1 à 2.

**28.** Article selon l'une quelconque des revendications précédentes, dans lequel la quantité totale desdits monomères monofonctionnels présents est de 0,5 % à 20 %.

**29.** Article selon l'une quelconque des revendications précédentes, dans lequel la quantité totale desdits monomères monofonctionnels présents est de 2 % à 10 %.

**30.** Article selon l'une quelconque des revendications précédentes, dans lequel la quantité totale desdits monomères monofonctionnels présents est de 4 % à 8 %.

**31.** Article selon l'une quelconque des revendications précédentes, dans lequel le rapport de la quantité totale des comonomères monofonctionnels au monomère de réticulation polyfonctionnel est de 1 à 10 en poids.

**32.** Article selon l'une quelconque des revendications précédentes, dans lequel le rapport de la quantité totale des comonomères monofonctionnels au monomère de réticulation polyfonctionnel est de 2 à 6 en poids.

**33.** Article selon l'une quelconque des revendications précédentes, dans lequel ledit revêtement polymère est hydrophile.

**34.** Article selon l'une quelconque des revendications précédentes, dans lequel ledit article est poreux, et ledit revêtement polymère présente une liaison aux molécules biologiques inférieure à 30 microgrammes par centimètre carré, mesurée par l'essai de liaison à l'IgG.

**35.** Article selon l'une quelconque des revendications précédentes, dans lequel ledit article est poreux, et ledit revêtement polymère présente une teneur en matières extractibles TOC inférieure à 1 microgramme de matières extractibles par centimètre carré de revêtement, mesurée par l'essai des matières extractibles TOC.

**36.** Article selon l'une quelconque des revendications précédentes, dans lequel ledit article est poreux, et ledit revêtement

polymère présente une teneur en matières extractibles TOC inférieure à 2 microgrammes de matières extractibles par centimètre carré de revêtement, mesurée par l'essai des matières extractibles NVR.

**37.** Article selon l'une quelconque des revendications précédentes, dans lequel ledit revêtement polymère présente une résistance aux bases inférieure à 1,3, mesurée par l'essai de mesure du temps d'écoulement.

**38.** Article selon l'une quelconque des revendications 1 à 33, dans lequel ledit article est non poreux, et ledit revêtement polymère présente une liaison aux molécules biologiques inférieure à 0,30 microgramme par centimètre carré, mesurée par l'essai de liaison à l'IgG.

**39.** Article selon l'une quelconque des revendications 1 à 33, dans lequel ledit article est non poreux, et ledit revêtement polymère présente un essai de BSA-Ponseau négatif.

**40.** Article selon l'une quelconque des revendications 1 à 33, dans lequel ledit article est non poreux, et ledit revêtement polymère présente une teneur en matières extractibles TOC inférieure à 0,01 microgramme de matières extractibles par centimètre carré de revêtement, mesurée par l'essai des matières extractibles TOC.

**41.** Article selon l'une quelconque des revendications 1 à 33, dans lequel ledit article est non poreux, et ledit revêtement polymère présente une teneur en matières extractibles TOC inférieure à 0,02 microgramme de matières extractibles par centimètre carré de revêtement, mesurée par l'essai des matières extractibles NVR.

**42.** Procédé de préparation d'un article portant un revêtement superficiel résistant aux molécules biologiques, ledit procédé comprenant les étapes consistant à :

(a) fournir un article ayant une surface ;
(b) éventuellement mettre ladite surface dudit article en contact avec un liquide mouillant pour mouiller ladite surface de celui-ci ;
(c) éventuellement remplacer ledit liquide mouillant par un deuxième liquide mouillant, laissant l'article mouillé par ledit deuxième liquide ;
(d) mettre ladite surface dudit article en contact avec une solution contenant :

(1) au moins deux monomères monofonctionnels choisis dans le groupe constitué par les acrylamides, les méthacrylamides et les N-vinylpyrrolidones ; et
(2) au moins un monomère polyfonctionnel choisi dans le groupe constitué par les acrylamides polyfonctionnels, les méthacrylamides polyfonctionnels et les diacroylpipérazines ;

ladite solution comprenant éventuellement en outre un ou plusieurs initiateurs de polymérisation ; et
(e) polymériser lesdits monomères pour former ladite surface résistant aux molécules biologiques, stable à la chaleur comprenant un multipolymëre réticulé.

**43.** Procédé d'augmentation de la biocompatibilité d'un article comprenant l'étape de revêtement d'au moins une surface dudit article, ledit revêtement comprenant un multipolymère réticulé, ledit multipolymère réticulé comprenant :

au moins un monomère polyfonctionnel choisi dans le groupe constitué par les acrylamides polyfonctionnels, les méthacrylamides polyfonctionnels et les diacroylpipérazines ; et
au moins deux monomères monofonctionnels choisis dans le groupe constitué par les acrylamides, les méthacrylamides et les N-vinylpyrrolidones.

**44.** Procédé selon la revendication 42 ou 43, dans lequel ledit article est un article de verrerie de laboratoire, un article médical, un récipient ou une conduite de boisson fluide, un article nautique ou un article de plomberie.

**45.** Procédé selon l'une quelconque des revendications 42 à 44, dans lequel ledit article est un article de verrerie de laboratoire.

**46.** Procédé selon la revendication 45, dans lequel ledit article de verrerie de laboratoire est un pot de coulée, un bouchon de pot de coulée, un ballon rond, conique ou cylindrique, un bécher, un tube de centrifugation, une bouteille de centrifugation, un colonne de chromatographie, un cylindre, un cylindre gradué, une chambre d'incubation, une chambre de fermentation, une pipete, une extrémité de pipette remplaçable, une plaque à plusieurs puits, un nacelle

de pesée, un filtre à milieux, une tuyauterie de dialyse, une tuyauterie de laboratoire, une tuyauterie de pompage, un seringue, une aiguille de seringue, une burette, un moule pour des tubes ou des gels d'électrophorèse, un appareil d'électrophorèse, un dispositif d'analyse par transfert, un dispositif d'analyse de séquences, un plateau de coloration de gel, une unité de filtration, un entonnoir, un tube d'hybridation, un ballon d'agitation, un ballon de culture de cellules, un tube de culture de cellules, un récipient de culture, une boîte de culture, un cylindre de clonage, une bouteille de milieux ou un bocal de milieux.

**47.** Procédé selon l'une quelconque des revendications 42 à 44, dans lequel ledit article est un article médical.

**48.** Procédé selon la revendication 47, dans lequel ledit article médical est un capteur biologique, un implant, un cathéter, un passement, une lentille de contact, une lentille implantable ou un timbre dermique.

**49.** Procédé selon l'une quelconque des revendications 42 à 44, dans lequel ledit article est un récipient ou une conduite de boisson fluide.

**50.** Procédé selon l'une quelconque des revendications 42 à 44, dans lequel ledit article est un article nautique.

**51.** Procédé selon la revendication 50, dans lequel ledit article nautique est un bateau.

**52.** Procédé selon la revendication 50, dans lequel ledit article nautique est un article d'équipement de bateau.

**53.** Procédé selon la revendication 42 ou 43, dans lequel ledit article est un aquarium, un article d'aquarium ou un article de plomberie.

**54.** Procédé selon l'une quelconque des revendications 42 à 53, dans lequel ledit revêtement est résistant aux molécules biologiques.

**55.** Procédé selon l'une quelconque des revendications 42 à 54, dans lequel ledit revêtement est résistant aux molécules biologiques, comme déterminé par l'essai de liaison à l'IgG.

**56.** Procédé selon l'une quelconque des revendications 42 à 55, dans lequel ledit revêtement est résistant aux molécules biologiques, comme déterminé par l'essai de BSA-Ponseau.

**57.** Procédé selon l'une quelconque des revendications 42 à 56, dans lequel ledit revêtement est stable à la chaleur.

**58.** Procédé selon l'une quelconque des revendications 42 à 57, dans lequel ledit revêtement est résistant aux bases.

**59.** Procédé selon l'une quelconque des revendications 42 à 58, dans lequel ledit revêtement est un revêtement propre.

**60.** Procédé selon l'une quelconque des revendications 42 à 59, dans lequel ledit revêtement est un revêtement polymère.

**61.** Procédé selon l'une quelconque des revendications 42 à 60, dans lequel ledit revêtement est un hydrogel.

**62.** Procédé selon l'une quelconque des revendications 42 à 61, dans lequel ledit multipolymère réticulé comprend au moins un monomère monofonctionnel qui est un acrylamide, dans lequel l'atome d'azote de l'acrylamide dudit acrylamide est remplacé par au moins un atome de carbone dialkyl-substitué gem.

**63.** Procédé selon l'une quelconque des revendications 42 à 62, dans lequel ledit multipolymère réticulé est un copolymère formé à partir de diméthylacrylamide, de diacétoneacrylamide et de méthylène-bis-acrylamide.

**64.** Procédé selon l'une quelconque des revendications 42 à 61, dans lequel ledit multipolymère réticulé est un copolymère formé à partir de méthylène-bis-acrylamide, de N-vinylpyrrolidone et de diméthylacrylamide ou de diacétone acrylamide.

**65.** Procédé selon l'une quelconque des revendications 42 à 61, dans lequel ledit revêtement est un revêtement superficiel formé séparément ; ledit revêtement superficiel comprenant un multipolymère réticulé ; ledit multipolymère réticulé comprenant :

au moins un monomère polyfonctionnel choisi dans le groupe constitué par les monomères acrylamide polyfonctionnels, les monomères méthacrylamide polyfonctionnels et les diacroylpipérazines ; et
au moins deux monomères monofonctionnels différents choisis dans le groupe des monomères N-vinylpyrrolidone et les monomères répondant à la formule :

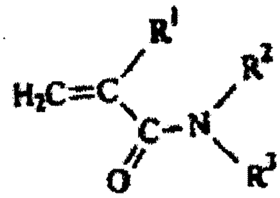

dans laquelle :

$R^1$ est H ou $CH_3$,
$R^2$ est H ou un groupe alkyle en $C_1$-$C_6$, de préférence en $C_1$-$C_3$, linéaire ou ramifié,
$R^3$ est H ou un groupe alkyle en $C_1$-$C_6$, de préférence en $C_1$-$C_3$, linéaire ou ramifié, ou $C(CH_3)_2CH_2C(=O)CH_3$ ou $(P=O)((NCH_3)_2)_2$ ou $C=ON(CH_3)_2$ ou $CH_2$-O-$R^4$, où $R^4$ est un groupe alkyle en $C_1$-$C_5$, linéaire ou ramifié, ou $(CH_2-CH_2-O)_n-R^5$, où $R^5$ est -H ou -$CH_3$, et n = 2 ou 3 ; à condition que $R^2$ et $R^3$ ne soient pas simultanément H.

**66.** Procédé selon l'une quelconque des revendications 42 à 65, dans lequel ledit multipolymère réticulé comprend en outre un monomère modifiant les propriétés supplémentaire.

**67.** Procédé selon la revendication 66, dans lequel ledit monomère modifiant les propriétés supplémentaire est choisi dans le groupe constitué par le chlorure de (3-(méthacryloylamino)propyl)triméthylammonium, le chlorure de 3-(acrylamidopropyl)triméthylammonium, l'acide 2-acrylamido-2-méthyl-1-propanesulfonique et l'aminopropylméthacrylamide.

**68.** Procédé selon l'une quelconque des revendications 42 à 67, dans lequel deux desdits monomères monofonctionnels sont présents dans un rapport de 1 à 5 en poids.

**69.** Procédé selon l'une quelconque des revendications 42 à 68, dans lequel deux desdits monomères monofonctionnels sont présents dans un rapport molaire de 1 à 2.

**70.** Procédé selon l'une quelconque des revendications 42 à 69, dans lequel la quantité totale desdits monomères monofonctionnels présents est de 0,5 % à 20 %.

**71.** Procédé selon l'une quelconque des revendications 42 à 70, dans lequel la quantité totale desdits monomères monofonctionnels présents est de 2 % à 10 %.

**72.** Procédé selon l'une quelconque des revendications 42 à 71, dans lequel la quantité totale desdits monomères monofonctionnels présents est de 4 % à 8 %.

**73.** Procédé selon l'une quelconque des revendications 42 à 72, dans lequel le rapport de la quantité totale des comonomères monofonctionnels au monomère de réticulation polyfonctionnel est de 1 à 10 en poids.

**74.** Procédé selon l'une quelconque des revendications 42 à 73, dans lequel le rapport de la quantité totale des comonomères monofonctionnels au monomère de réticulation polyfonctionnel est de 2 à 6 en poids.

**75.** Procédé selon l'une quelconque des revendications 42 à 74, dans lequel ledit revêtement polymère est hydrophile.

**76.** Procédé selon l'une quelconque des revendications 42 à 75, dans lequel ledit article est poreux, et ledit revêtement polymère présente une liaison aux molécules biologiques inférieure à 30 microgrammes par centimètre carré, mesurée par l'essai de liaison à l'IgG.

**77.** Procédé selon l'une quelconque des revendications 42 à 76, dans lequel ledit article est poreux, et ledit revêtement polymère présente une teneur en matières extractibles TOC inférieure à 1 microgramme de matières extractibles par centimètre carré de revêtement, mesurée par l'essai des matières extractibles TOC.

**78.** Procédé selon l'une quelconque des revendications 42 à 77, dans lequel ledit article est poreux, et ledit revêtement polymère présente une teneur en matières extractibles TOC inférieure à 2 microgrammes de matières extractibles par centimètre carré de revêtement, mesurée par l'essai des matières extractibles NVR.

**79.** Procédé selon l'une quelconque des revendications 42 à 78, dans lequel ledit revêtement polymère présente une résistance aux bases inférieure à 1,3, mesurée par l'essai de mesure du temps d'écoulement.

**80.** Procédé selon l'une quelconque des revendications 42 à 77, dans lequel ledit article est non poreux, et ledit revêtement polymère présente une liaison aux molécules biologiques inférieure à 0,30 microgramme par centimètre carré, mesurée par l'essai de liaison à l'IgG.

**81.** Procédé selon l'une quelconque des revendications 42 à 77, dans lequel ledit article est non poreux, et ledit revêtement polymère présente un essai de BSA-Ponseau négatif.

**82.** Procédé selon l'une quelconque des revendications 42 à 77, dans lequel ledit article est non poreux, et ledit revêtement polymère présente une teneur en matières extractibles TOC inférieure à 0,01 microgramme de matières extractibles par centimètre carré de revêtement, mesurée par l'essai des matières extractibles TOC.

**83.** Procédé selon l'une quelconque des revendications 42 à 77, dans lequel ledit article est non poreux, et ledit revêtement polymère présente une teneur en matières extractibles TOC inférieure à 0,02 microgramme de matières extractibles par centimètre carré de revêtement, mesurée par l'essai des matières extractibles NVR.

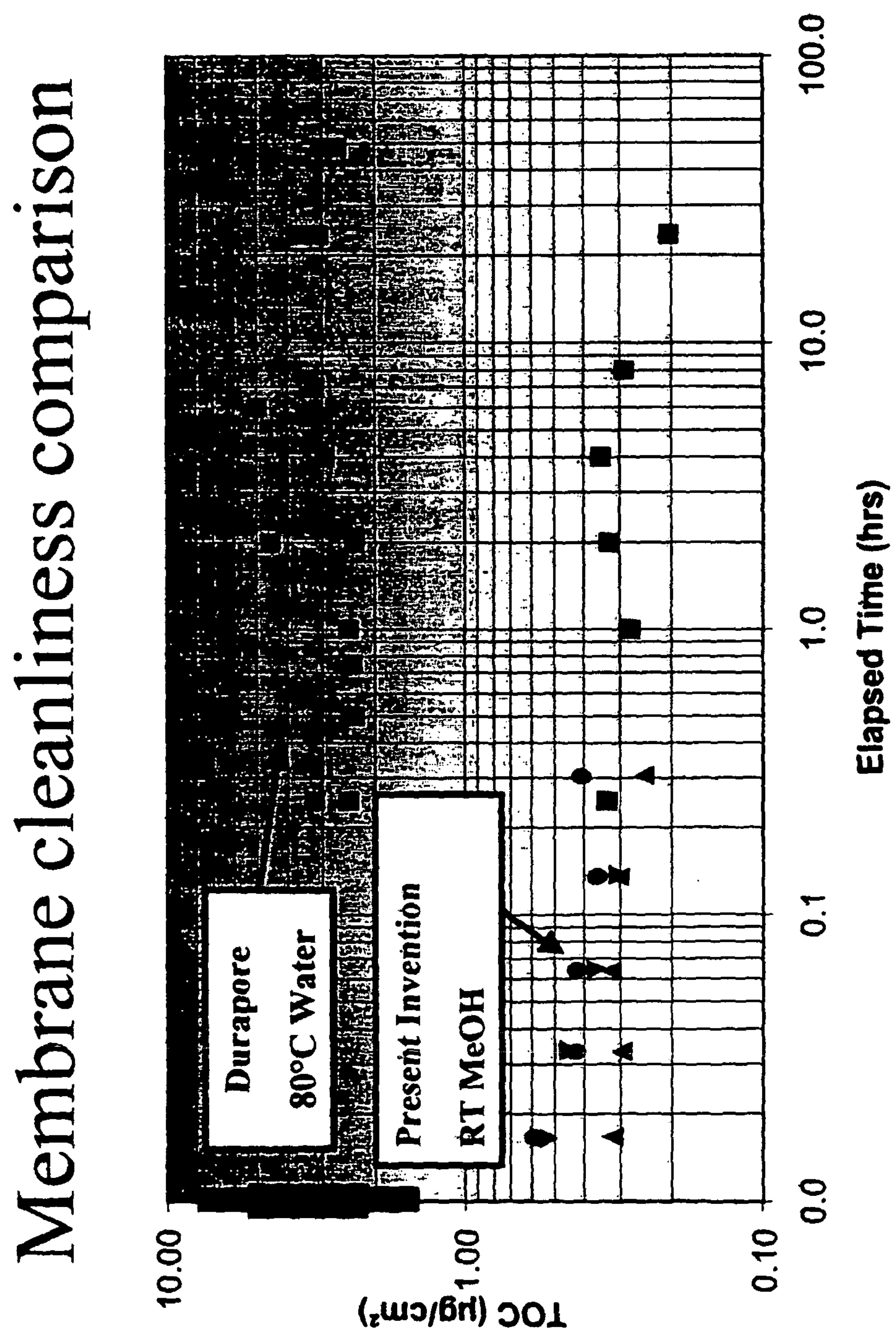
Membrane cleanliness comparison
Durapore
80°C Water
Present Invention
RT MeOH
10.00
1.00
0.10
TOC (µg/cm²)
0.0
0.1
1.0
10.0
100.0
Elapsed Time (hrs)

FIGURE 1

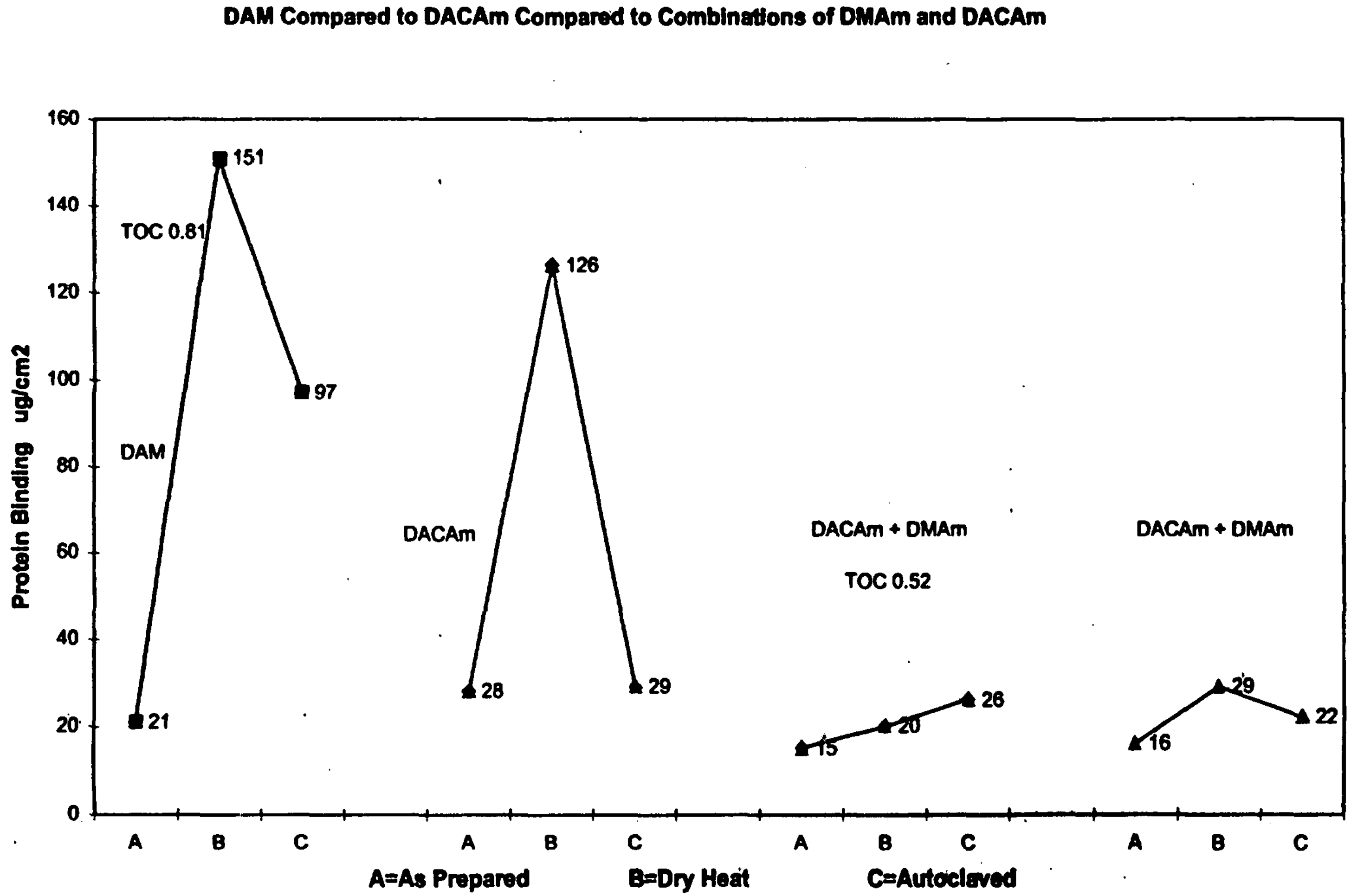
DAM Compared to DACAm Compared to Combinations of DMAm and DACAm
Protein Binding ug/cm2
160
140
120
100
80
60
40
20
0
TOC 0.81
DAM
151
97
21
DACAm
126
28
29
DACAm + DMAm
TOC 0.52
15
20
26
DACAm + DMAm
16
29
22
A B C A B C A B C A B C
A=As Prepared
B=Dry Heat
C=Autoclaved

FIGURE 2